(19) **Europäisches Patentamt European Patent Office Office européen des brevets**

(11) **EP 4 478 775 A1**

(12) **EUROPEAN PATENT APPLICATION**
published in accordance with Art. 153(4) EPC

(43) Date of publication:
18.12.2024 Bulletin 2024/51

(21) Application number: 23773706.9

(22) Date of filing: 16.03.2023

(51) International Patent Classification (IPC):
$H04W\ 24/02^{(2009.01)}$    $H04L\ 41/0823^{(2022.01)}$

(52) Cooperative Patent Classification (CPC):
H04L 41/0823; H04W 24/02; H04W 24/06

(86) International application number:
PCT/CN2023/082010

(87) International publication number:
WO 2023/179458 (28.09.2023 Gazette 2023/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.03.2022 CN 202210283542

(71) Applicant: Huawei Technologies Co., Ltd.
Shenzhen, Guangdong 518129 (CN)

(72) Inventors:
• CHAI, Xiaomeng
  Shenzhen, Guangdong 518129 (CN)
• WU, Yiqun
  Shenzhen, Guangdong 518129 (CN)

(74) Representative: Maiwald GmbH
Engineering
Elisenhof
Elisenstrasse 3
80335 München (DE)

(54) **COMMUNICATION METHOD AND COMMUNICATION APPARATUS**

(57) This disclosure provides a communication method and a communication apparatus. The method includes: receiving first information from a first node, where the first information is for configuring a first model structure of an intelligent model, the first model structure includes N operations, N is a positive integer, an operation in the N operations is a calculation for obtaining an output parameter by using an operation parameter and an operator, and the operator is an operation rule or a function; and determining the intelligent model based on the first information. This enables communication nodes to reach a consensus on the model structure, makes the intelligent model applicable to a communication network, and implements communication network intelligence.

400

| First node | | Second node |
|---|---|---|

S401: Send first information, where the first information is for configuring a first model structure of an intelligent model, and the first model structure includes N operations

S402: Determine the intelligent model based on the first information

FIG. 4

## Description

This application claims priority to Chinese Patent Application No. 202210283542.9, filed with the China National Intellectual Property Administration on March 22, 2022 and entitled "COMMUNICATION METHOD AND COMMUNICATION APPARATUS", which is incorporated herein by reference in its entirety.

## TECHNICAL FIELD

This disclosure relates to the communication field, and more specifically, to a communication method and a communication apparatus.

## BACKGROUND

With continuous evolution of wireless communication networks, the networks have increasingly powerful functions, and can support more diversified services. For example, the network implements an ultra-high rate, ultra-low latency, and/or ultra-large connections for network communication by increasing a communication spectrum range and applying new technologies such as a high-order multiple-input multiple-output (multiple input multiple output, MIMO) technology, a beamforming technology, and/or a beam management technology. New requirements, new scenarios, and new features bring unprecedented challenges to network planning, operations and maintenance, and efficient operation. This makes the network planning, network configuration, and/or resource scheduling increasingly complex. To meet this challenge, applying an artificial intelligence technology to the wireless communication network may be considered, to implement network intelligence. However, how to effectively implement the artificial intelligence in the network is a study-worthy problem.

## SUMMARY

This disclosure provides a communication method and a communication apparatus, to enable communication nodes to reach a consensus on a model structure, make an intelligent model applicable to a communication network, and implement communication network intelligence.

According to a first aspect, a communication method is provided. The method includes: receiving first information from a first node, where the first information is for configuring a first model structure of an intelligent model, the first model structure includes N operations, N is a positive integer, an operation in the N operations is a calculation for obtaining an output parameter by using an operation parameter and an operator, and the operator is an operation rule or a function; and determining the intelligent model based on the first information.

According to the foregoing solution, the first node configures, for a second node by using the first information, a model structure that is of the intelligent model and that includes at least one operation. This enables the communication nodes to reach a consensus on the model structure through information exchange, makes the intelligent model applicable to communication, and implements communication network intelligence.

With reference to the first aspect, in some implementations of the first aspect, for an operation in the N operations, the first information indicates the operator and the operation parameter that are used in the operation.

According to the foregoing solution, the model structure can be flexibly configured.

With reference to the first aspect, in some implementations of the first aspect, for an operation in the N operations, the first information further indicates one or more of identification information, dimension information, precision information, or data type information of the output parameter.

According to the foregoing solution, the first node may further configure related information of the output parameter of the operation in the model structure. This improves configuration precision of the model structure, to help the second node obtain a model structure expected by the first node.

With reference to the first aspect, in some implementations of the first aspect, the first information indicates an input parameter and/or an output parameter of the first model structure.

With reference to the first aspect, in some implementations of the first aspect, the N operations include a first operation and a second operation, and the first information indicates that an operation parameter of the first operation includes an output parameter of the second operation.

According to the foregoing solution, in the first information, an operation parameter of an operation includes an output parameter of another operation, so that a connection relationship between the operations can be flexibly configured.

With reference to the first aspect, in some implementations of the first aspect, the operation parameter includes a model parameter, and the first information indicates a parameter value of the model parameter, or indicates identification information of the model parameter.

According to the foregoing solution, the first information may directly indicate the parameter value of the model parameter. Alternatively, the first information may indicate the identification information of the model parameter. In this way, the first node can flexibly configure or update (in other words, reconfigure) the parameter value of the model parameter based on the identification information. This can improve flexibility of managing the model structure.

With reference to the first aspect, in some implementations of the first aspect, the first information indicates whether the parameter value of the model parameter is updatable in model training.

According to the foregoing solution, whether the model parameter is updatable is indicated, so that the second node can determine a parameter that is updatable through training and a parameter that does not need to be updated through training, to reduce power consumption of the second node in the model training.

With reference to the first aspect, in some implementations of the first aspect, the first information indicates the identification information of the model parameter, and the method further includes: receiving second information from the first node, where the second information indicates a candidate set of the parameter value of the model parameter; and determining the parameter value of the model parameter based on the identification information of the model parameter and the candidate set.

According to the foregoing solution, the first node can flexibly configure or update (in other words, reconfigure) the parameter value of the model parameter based on the identification information of the model parameter. This can improve the flexibility of managing the model structure.

With reference to the first aspect, in some implementations of the first aspect, the method further includes: receiving third information from the first node, where the third information is for configuring one or more of a quantization mode, a quantization range, or quantization precision of a parameter of the first model structure.

According to the foregoing solution, the configuration precision of the model structure can be improved, to help the second node obtain the model structure expected by the first node.

With reference to the first aspect, in some implementations of the first aspect, the method further includes: sending fourth information to the first node, where the fourth information includes one or more of the following capability information:

first capability information, indicating a supported integration degree of an operator;
second capability information, indicating a supported operator set; or
third capability information, indicating a supported quantization configuration.

According to the foregoing solution, the second node sends the capability information to the first node, so that the first node can determine, based on the capability information, a model structure that meets a capability of the second node, to help the second node obtain the model structure expected by the first node and normally use (for example, for training and/or inference), within a capability range of the second node, the intelligent model including the model structure.

With reference to the first aspect, in some implementations of the first aspect, the first information indicates one or more of dimension information, parameter type information, or identification information of the operation parameter.

According to the foregoing solution, the first node may further configure related information of the operation parameter in the model structure. This improves the configuration precision of the model structure, to help the second node obtain the model structure expected by the first node.

With reference to the first aspect, in some implementations of the first aspect, the first information is for configuring to add or update the first model structure in the intelligent model.

With reference to the first aspect, in some implementations of the first aspect, the first information is for configuring to add or update the N operations in the first model structure.

With reference to the first aspect, in some implementations of the first aspect, the first model structure further includes M operations, M is a positive integer, and that the first information is for configuring a first model structure of an intelligent model includes: the first information indicates to delete the M operations from the first model structure.

With reference to the first aspect, in some implementations of the first aspect, the method further includes: receiving fifth information from the first node, where the fifth information indicates to delete the first model structure in the intelligent model.

The foregoing solution provides a plurality of configuration manners of configuring, updating, and deleting the model structure, so that the intelligent model can be flexibly configured, managed, and applied in a communication network in a low-overhead configuration manner.

According to a second aspect, a communication method is provided. The method includes: sending first information to a second node, where the first information is for configuring a first model structure of an intelligent model, the first model structure includes N operations, N is a positive integer, an operation in the N operations is a calculation for obtaining an output parameter by using an operation parameter and an operator, and the operator is an operation rule or a function.

For related descriptions of specific usage of the first information, the operation, parameters, and the like, refer to the descriptions in the first aspect. For brevity, details are not described herein again.

With reference to the second aspect, in some implementations of the second aspect, the first information indicates identification information of the model parameter, and the method further includes: sending second information to the second node, where the second information indicates a candidate set of a parameter value of the model parameter.

With reference to the second aspect, in some implementations of the second aspect, the method further includes: sending third information to the second node, where the third information is for configuring one or more of a quantization mode, a quantization range, or quantization precision of a parameter of the first model structure.

With reference to the second aspect, in some implementations of the second aspect, the method further includes: receiving fourth information sent by the second node, where the fourth information indicates capability information of the second node; and determining the first model structure based on the fourth information, where the capability information includes one or more of the following information:

first capability information, indicating a supported integration degree of an operator;
second capability information, indicating a supported operator set; or
third capability information, indicating a supported quantization configuration.

With reference to the second aspect, in some implementations of the second aspect, the method further includes: sending fifth information to the second node, where the fifth information indicates to delete the first model structure in the intelligent model.

According to a third aspect, a communication apparatus is provided. In a design, the apparatus may include modules for correspondingly performing the method/operations/steps/actions described in the first aspect. The module may be a hardware circuit, may be software, or may be implemented by a combination of a hardware circuit and software. In a design, the apparatus includes a transceiver unit, configured to receive first information from a first node, where the first information is for configuring a first model structure of an intelligent model, the first model structure includes N operations, N is a positive integer, an operation in the N operations is a calculation for obtaining an output parameter by using an operation parameter and an operator, and the operator is an operation rule or a function.

Optionally, the apparatus further includes a processing unit, configured to determine the intelligent model based on the first information.

According to a fourth aspect, a communication apparatus is provided. In a design, the apparatus may include modules for correspondingly performing the method/operations/steps/actions described in the second aspect. The module may be a hardware circuit, may be software, or may be implemented by a combination of a hardware circuit and software. In a design, the apparatus includes a transceiver unit, configured to send first information to a second node, where the first information is for configuring a first model structure of an intelligent model, the first model structure includes N operations, N is a positive integer, an operation in the N operations is a calculation for obtaining an output parameter by using an operation parameter and an operator, and the operator is an operation rule or a function.

Optionally, the apparatus further includes a processing unit, configured to determine the intelligent model.

According to a fifth aspect, a communication apparatus is provided, including a processor. The processor may implement the method according to any one of the first aspect and the possible implementations of the first aspect. Optionally, the communication apparatus further includes a memory. The processor is coupled to the memory, and may be configured to execute instructions in the memory, to implement the method according to any one of the first aspect and the possible implementations of the first aspect. Optionally, the communication apparatus further includes a communication interface, and the processor is coupled to the communication interface. In this disclosure, the communication interface may be a transceiver, a pin, a circuit, a bus, a module, or a communication interface of another type. This is not limited.

According to a sixth aspect, a communication apparatus is provided, including a processor. The processor may implement the method according to any one of the second aspect and the possible implementations of the second aspect. Optionally, the communication apparatus further includes a memory. The processor is coupled to the memory, and may be configured to execute instructions in the memory, to implement the method according to any one of the second aspect and the possible implementations of the second aspect. Optionally, the communication apparatus further includes a communication interface, and the processor is coupled to the communication interface.

According to the communication apparatus provided in the fifth aspect or the sixth aspect, in an implementation, when the communication apparatus is a communication device, the communication interface may be a transceiver. Optionally, the transceiver may be a transceiver circuit. In another implementation, when the communication apparatus is a chip configured in a communication device, the communication interface may be an input/output interface.

Optionally, the input/output interface may include an input circuit and an output circuit.

In a specific implementation process, the input circuit may be an input pin, the output circuit may be an output pin, and the processor may be a transistor, a gate circuit, a flip-flop, various logic circuits, or the like. An input signal received by the input circuit may be received and input by, for example but not limited to, a receiver, a signal output by the output circuit may be output to, for example but not limited to, a transmitter and then transmitted by the transmitter, and the input circuit and the output circuit may be a same circuit, where the circuit is separately used as the input circuit and the output circuit at different moments. Specific implementations of the processor and various circuits are not limited in this disclosure.

According to a seventh aspect, a computer program product is provided. The computer program product includes a computer program (which may also be referred to as code or instructions). When the computer program is run, a computer is enabled to perform the method according to any one of the first aspect and the possible implementations of the first aspect, or perform the method according to any one of the second aspect and the possible implementations of the second aspect.

According to an eighth aspect, a computer-readable storage medium is provided. The computer-readable storage medium stores a computer program (which may also be referred to as code or instructions). When the computer program is run on a computer, the computer is enabled to perform the method according to any one of the first aspect and the possible implementations of the first aspect, or perform the method according to any one of the second aspect and the possible implementations of the second aspect.

According to a ninth aspect, a communication system is provided, including at least one communication apparatus provided in the third aspect and at least one communication apparatus provided in the fourth aspect, or including at least one communication apparatus provided in the fifth aspect and at least one communication apparatus provided in the sixth aspect.

## BRIEF DESCRIPTION OF DRAWINGS

FIG. 1 is a diagram of a communication system according to this disclosure;
FIG. 2 is an example diagram of an application framework of AI in a communication system according to this disclosure;
FIG. 3A to FIG. 3F are diagrams of network architectures according to this disclosure;
FIG. 4 is a schematic flowchart of a communication method according to this disclosure;
FIG. 5 is a diagram of a model structure according to this disclosure;
FIG. 6 is another diagram of a model structure according to this disclosure;
FIG. 7 is a block diagram of an example of a communication apparatus according to an embodiment of this disclosure;
FIG. 8 is a diagram of a structure of an example of a terminal device according to an embodiment of this disclosure; and
FIG. 9 is a diagram of a structure of an example of a network device according to an embodiment of this disclosure.

## DESCRIPTION OF EMBODIMENTS

In this disclosure, "at least one (item)" may also be described as "one or more (items)", and "a plurality of (items)" may be two (items), three (items), four (items), or more (items). This is not limited. "/" may represent an "or" relationship between associated objects. For example, A/B may represent A or B. A term "and/or" may indicate that there are three relationships between associated obj ects. For example, A and/or B may represent the following three cases: Only A exists, both A and B exist, and only B exists, where A and B may be singular or plural. For ease of describing technical solutions of this disclosure, words such as "first", "second", "A", or "B" may be used to distinguish technical features with same or similar functions. The words such as "first", "second", "A", or "B" do not limit a quantity and an execution sequence. In addition, the words such as "first", "second", "A", or "B" do not limit the technical features to be necessarily different. Words such as "example" or "for example" represent giving an example, an illustration, or a description, and any design scheme described as "example" or "for example" should not be construed as being more preferred or having more advantages than other design schemes. The words such as "example" or "for example" are intended to present a related concept in a specific manner for ease of understanding.

The following describes the technical solutions of this disclosure with reference to the accompanying drawings.

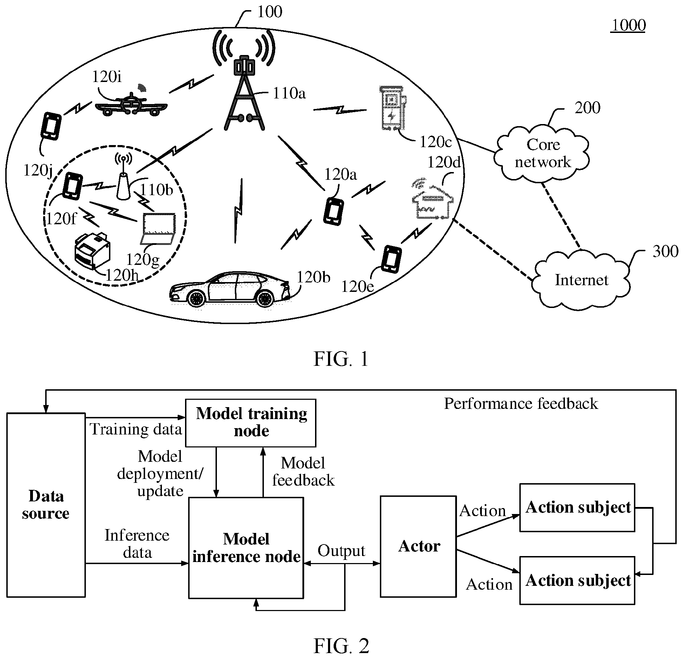

FIG. 1 is a diagram of an architecture of a communication system 1000 to which this disclosure is applicable. As shown in FIG. 1, the communication system includes a radio access network (radio access network, RAN) 100 and a core network (core network, CN) 200. Optionally, the communication system 1000 may further include an Internet 300. The radio access network 100 may include at least one access network device (for example, 110a and 110b in FIG. 1), and may further include at least one terminal (for example, 120a to 120j in FIG. 1). The terminal is connected to the access network device in a wireless manner. The terminal and the access network device may perform wireless communication on a licensed spectrum resource and/or an unlicensed spectrum resource. The terminals may also be connected to each other in the wireless manner. The terminals may perform wireless communication on a licensed spectrum resource and/or an unlicensed spectrum resource. The access network device is connected to the core network in the wireless manner or a wired manner. A core network device and the access network device may be different physical devices that are independent, or may be a same physical device that integrates functions of the core network device and functions of the access network device. Alternatively, there may be another possible case. For example, the functions of the access network device and a part of functions of the core network device may be integrated into one physical device, and another physical device implements a remaining part of functions of the core network device. Physical existence forms of the core network device and the access network device are not limited in this disclosure. The access network devices may be connected to each other in the wired or wireless manner. FIG. 1 is only a diagram. The communication system may further include another network device, for example, a wireless relay device and a wireless backhaul device.

The access network device may be a base station (base station), a NodeB (NodeB), an evolved NodeB (evolved NodeB, eNodeB or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN or open RAN), a next-generation base station in a 6th generation (6th generation, 6G) mobile communication system, a base station in a future mobile communication system, an access node in a wireless fidelity (wireless fidelity, Wi-Fi) system, or the like. Alternatively, the access network device may be a module or unit that implements a part of functions of a base station, for example, may be a central unit (central unit, CU), a distributed unit (distributed unit, DU), a central unit-control plane (CU control plane, CU-CP) module, or a central unit-user plane (CU user plane, CU-UP) module. The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in this disclosure. The 5G system may also be referred to as a new radio (new radio, NR) system. An access network node in this disclosure may be the access network device, or may be a module or unit configured in the access network device.

In this disclosure, an apparatus configured to implement the functions of the access network device may be an access network device, or may be an apparatus, for example, a chip system, a hardware circuit, a software module, or a combination of a hardware circuit and a software module, that can support the access network device in implementing the functions. The apparatus may be installed in the access network device or may collaborate with the access network device for use. In this disclosure, the chip system may include a chip, or may include a chip and another discrete component. For ease of description, the technical solutions provided in this disclosure are described below by using an example in which the apparatus configured to implement the functions of the access network device is the access network device, and optionally using an example in which the access network device is a base station.

(1) Protocol layer structure

Communication between an access network device and a terminal complies with a specific protocol layer structure. The protocol layer structure may include a control plane-protocol layer structure and a user plane-protocol layer structure. For example, the control plane-protocol layer structure may include a function of at least one of the following protocol layers: a radio resource control (radio resource control, RRC) layer, a packet data convergence protocol (packet data convergence protocol, PDCP) layer, a radio link control (radio link control, RLC) layer, a media access control (media access control, MAC) layer, or a physical (physical, PHY) layer. For example, the user plane-protocol layer structure may include a function of at least one of the following protocol layers: a PDCP layer, an RLC layer, a MAC layer, or a physical layer. In a possible implementation, there may be further a service data adaptation protocol (service data adaptation protocol, SDAP) layer above the PDCP layer.

Optionally, the protocol layer structure between the access network device and the terminal may further include an artificial intelligence (artificial intelligence, AI) layer for transmission of data related to an AI function.

The protocol layer structure between the access network device and the terminal may be considered as an access stratum (access stratum, AS) structure. Optionally, there may be further a non-access stratum (non-access stratum, NAS) above the AS, and the NAS is used by the access network device to forward, to the terminal, information that is from a core network device, or is used by the access network device to forward, to the core network device, information that is from the terminal. In this case, it may be considered that there is a logical interface between the terminal and the core network device. The access network device may forward the information between the terminal and the core network device in a transparent transmission manner. For example, NAS signaling may be mapped to or included in RRC signaling, and is used as an element of the RRC signaling.

(2) Central unit (central unit, CU) and distributed unit (distributed unit, DU)

An access network device may include a CU and a DU. A plurality of DUs may be centrally controlled by one CU. For example, an interface between the CU and the DU may be referred to as an F1 interface. A control plane (control plane, CP) interface may be F1-C, and a user plane (user plane, UP) interface may be F1-U. Specific names of various interfaces are not limited in this disclosure. The CU and the DU may be divided based on protocol layers of a wireless network. For example, functions of a PDCP layer and protocol layers (such as an RRC layer and an SDAP layer) above the PDCP layer are set on the CU, and functions of protocol layers (such as an RLC layer, a MAC layer, and a PHY layer) below the PDCP layer are set on the DU. For another example, functions of protocol layers above a PDCP layer are set on the CU, and functions of the PDCP layer and protocol layers below the PDCP layer are set on the DU. This is not limited.

The division of the processing functions of the CU and the DU based on the protocol layers is merely an example. Alternatively, division may be performed in another manner. For example, the CU or the DU may be divided to have functions of more protocol layers. For another example, the CU or the DU may be divided to have a part of processing functions of a protocol layer. In a design, a part of functions of the RLC layer and functions of protocol layers above the RLC layer are set on the CU, and a remaining part of functions of the RLC layer and functions of protocol layers below the RLC layer are set on the DU. In another design, the functions of the CU or the DU may alternatively be divided based on a service type or another system requirement. For example, the division may be performed based on latency. A function whose processing time needs to satisfy a latency requirement is set on the DU, and a function whose processing time does not need to satisfy the latency requirement is set on the CU. In another design, the CU may alternatively have one or more functions of a core network. For example, the CU may be disposed on a network side to facilitate central management. In another design, a radio unit (radio unit, RU) of the DU is disposed remotely. Optionally, the RU may have a radio frequency function.

Optionally, the DU and the RU may be divided at the PHY layer. For example, the DU may implement higher-layer functions at the PHY layer, and the RU may implement lower-layer functions at the PHY layer. For sending, a function of the PHY layer may include at least one of the following: cyclic redundancy check (cyclic redundancy check, CRC) bit addition, channel coding, rate matching, scrambling, modulation, layer mapping, precoding, resource mapping, physical antenna mapping, or radio frequency sending. For receiving, a function of the PHY layer may include at least one of the following: CRC check, channel decoding, rate de-matching, descrambling, demodulation, layer de-mapping, channel detection, resource de-mapping, physical antenna de-mapping, or radio frequency receiving. The higher-layer functions of the PHY layer may include a part of functions of the PHY layer. The part of functions are closer to the MAC layer. The lower-layer functions of the PHY layer may include the other part of functions of the PHY layer. For example, the other part of functions are closer to the radio frequency function. For example, the higher-layer functions of the PHY layer may include the CRC bit addition, the channel coding, the rate matching, the scrambling, the modulation, and the layer mapping; and the lower-layer functions of the PHY layer may include the precoding, the resource mapping, the physical antenna mapping, and the radio frequency sending. Alternatively, the higher-layer functions of the PHY layer may include the CRC bit addition, the channel coding, the rate matching, the scrambling, the modulation, the layer mapping, and the precoding; and the lower-layer functions of the PHY layer may include the resource mapping, the physical antenna mapping, and the radio frequency sending. For example, the higher-layer functions of the PHY layer may include the CRC check, the channel decoding, the rate de-matching, the decoding, the demodulation, and the layer de-mapping; and the lower-layer functions of the PHY layer may include the channel detection, the resource de-mapping, the physical antenna de-mapping, and the radio frequency receiving. Alternatively, the higher-layer functions of the PHY layer may include the CRC check, the channel decoding, the rate de-matching, the decoding, the demodulation, the layer de-mapping, and the channel detection; and the lower-layer functions of the PHY layer may include the resource de-mapping, the physical antenna de-mapping, and the radio frequency receiving.

Optionally, the functions of the CU may be implemented by one entity (or module), or may be implemented by different entities. For example, the functions of the CU may be further divided, and a control plane and a user plane are split and implemented by different entities. Split entities are a control plane CU entity (namely, a CU-CP entity) and a user plane CU entity (namely, a CU-UP entity). The CU-CP entity and the CU-UP entity may be coupled to the DU, to jointly complete functions of the access network device.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. For brevity of description, all possible combination forms are not enumerated herein. These modules and methods performed by the modules also fall within the protection scope of this disclosure.

The terminal may also be referred to as a terminal device, user equipment (user equipment, UE), a mobile station, a mobile terminal, or the like. The terminal may be widely used in various scenarios for communication. For example, the scenarios include but are not limited to at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), device-to-device (device-to-device, D2D), vehicle to everything (vehicle to everything, V2X), machine type communication (machine type communication, MTC), Internet of things (Internet of things, IoT), virtual reality, augmented reality, industrial control, self-driving, telemedicine, a smart grid, smart furniture, smart office, smart wearable, smart transportation, or a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in this disclosure.

In this disclosure, an apparatus configured to implement functions of the terminal may be a terminal, or may be an apparatus, for example, a chip system, a hardware circuit, a software module, or a combination of a hardware circuit and a software module, that can support the terminal in implementing the functions. The apparatus may be installed in the terminal or may collaborate with the terminal for use. For ease of description, the technical solutions provided in this disclosure are described below by using an example in which the apparatus configured to implement the functions of the terminal is the terminal, and optionally using an example in which the terminal is UE.

The base station and/or the terminal may be fixed or mobile. The base station and/or the terminal may be deployed on the land, including an indoor or outdoor device, a handheld device, or a vehicle-mounted device; may be deployed on the water; or may be deployed on an airplane, a balloon, and an artificial satellite in the air. Environments/scenarios in which the base station and the terminal are located are not limited in this disclosure. The base station and the terminal may be deployed in a same environment/scenario or different environments/scenarios. For example, the base station and the terminal are both deployed on the land. Alternatively, the base station is deployed on the land, and the terminal is deployed on the water. Examples are not enumerated.

The roles of the base station and the terminal may be relative. For example, the helicopter or uncrewed aerial vehicle 120i in FIG. 1 may be configured as a mobile base station; and for those terminals 120j accessing the radio access network 100 through 120i, the terminal 120i is a base station. However, for the base station 110a, 120i may be a terminal, to be specific, 110a and 120i may communicate with each other according to a wireless air interface protocol. Alternatively, 110a and 120i communicate with each other according to an interface protocol between base stations. In this case, for 110a, 120i is also a base station. Therefore, both the base station and the terminal may be collectively referred to as communication apparatuses (communication devices), 110a and 110b in FIG. 1 may be referred to as communication apparatuses having functions of the base station, and 120a to 120j in FIG. 1 may be referred to as communication apparatuses having functions of the terminal.

Communication between the base station and the terminal, between the base stations, or between the terminals may be performed through a licensed frequency band, may be performed through an unlicensed frequency band , or may be performed through both a licensed frequency band and an unlicensed frequency band. The communication may be performed through a frequency band below 6 gigahertz (gigahertz, GHz), may be performed through a frequency band above 6 GHz, or may be performed through both a frequency band below 6 GHz and a frequency band above 6 GHz. A frequency band resource for wireless communication is not limited in this disclosure.

In this disclosure, an independent network element (for example, referred to as an AI network element, an AI node, or an AI device) may be introduced to the communication system shown in FIG. 1, to implement an AI-related operation. The AI network element may be directly connected to a base station, or may be indirectly connected to a base station through a third-party network element. Optionally, the third-party network element may be a core network element, for example, an access and mobility management function (access and mobility management function, AMF) network element or a user plane function (user plane function, UPF) network element. Alternatively, an AI entity may be configured in another network element in the communication system to implement an AI-related operation. The AI entity may be referred to as an AI module or have another name. Optionally, the another network element may be a base station, a core network device, an operation, administration and maintenance (operation, administration and maintenance, OAM), or the like. In this case, a network element that performs the AI-related operation is a network element in which an AI function is built. Because both the AI network element and the AI entity implement the AI-related function, for ease of description, the AI network element and the network element in which the AI function is built are collectively referred to as an AI unit below. The OAM is configured to operate, administer, and/or maintain a core network device (is an operation, administration and maintenance of the core network device), and/or is configured to operate, administer, and/or maintain an access network device (is an operation, administration and maintenance of the access network device).

Optionally, to support AI, the AI entity may be integrated into a terminal or a terminal chip.

In this disclosure, an AI model is a specific method for implementing the AI function. The AI model represents a mapping relationship between an input and an output of the model. The AI model may be a neural network model, a random forest (random forest) model, a k-means (k-means) model, a support vector machine (support vector machine, SVM) model, a decision tree (decision tree) model, or another machine learning model. The AI model may be referred to as a model for short. The AI-related operation may include at least one of the following: data collection, model training, model information release, model deduction (or referred to as model inference, inference, prediction, or the like), inference result release, or the like.

FIG. 2 is an example diagram of a first application framework of AI in a communication system. In FIG. 2, a data source (data source) is for storing training data and inference data. A model training node (model training host) analyzes or trains the training data (training data) provided by the data source, to obtain an AI model, and deploys the AI model in a model inference node (model inference host). The AI model represents a mapping relationship between an input and an output of the model. Obtaining the AI model through learning by the model training node is equivalent to obtaining the mapping relationship between the input and the output of the model through learning by the model training node by using the training data. The model inference node uses the AI model to perform inference based on the inference data provided by the data source, to obtain an inference result. The method may also be described as follows: The model inference node inputs the inference data to the AI model, to obtain an output by using the AI model, where the output is the inference result. The inference result may indicate a configuration parameter to be used (acted) by an action subject and/or an operation to be performed by the action subject. The inference result may be centrally planned by an actor (actor) entity, and sent to one or more action subjects (for example, network elements) for action. Optionally, the model inference node may feed back the inference result of the model inference node to the model training node. This process may be referred to as model feedback. A parameter that is fed back is used by the model training node to update the AI model and deploy an updated AI model in the model inference node. Optionally, the action subject may feed back, to the data source, a network parameter collected by the action subject. This process may be referred to as performance feedback, and a parameter that is fed back may be used as the training data or the inference data.

In this disclosure, the application framework shown in FIG. 2 may be deployed in a network element shown in FIG. 1. For example, the application framework in FIG. 2 may be deployed in at least one of the terminal device, the access network device, the core network device, or the independently deployed AI network element (not shown) in FIG. 1. For example, the AI network element (which may be considered as the model training node) may analyze or train training data (training data) provided by the terminal device and/or the access network device, to obtain a model. At least one (which may be considered as the model inference node) of the terminal device, the access network device, or the core network device may perform inference by using the model and inference data, to obtain an output of the model. The inference data may be provided by the terminal device and/or the access network device. An input of the model includes the inference data, and the output of the model is an inference result corresponding to the model. At least one (which may be considered as the action subject) of the terminal device, the access network device, or the core network device may perform a corresponding operation based on the inference data and/or the inference result. The model inference node and the action subject may be the same or may be different. This is not limited.

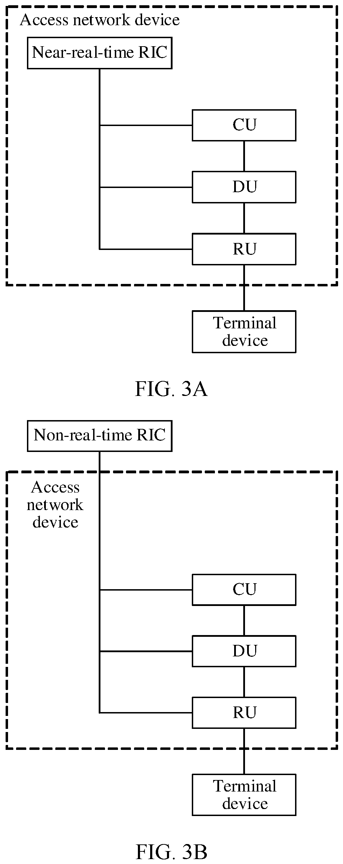

With reference to FIG. 3A to FIG. 3D, the following describes a network architecture to which the communication solutions provided in this disclosure can be applied.

As shown in FIG. 3A, in a first possible implementation, an access network device includes a near-real-time radio access network intelligent controller (RAN intelligent controller, RIC) module, configured to perform model learning and inference. For example, the near-real-time RIC may be configured to train an AI model, and perform inference by using the AI model. For example, the near-real-time RIC may obtain network-side and/or terminal-side information from at least one of a CU, a DU, or an RU, and the information may be used as training data or inference data. Optionally, the near-real-time RIC may submit an inference result to at least one of the CU, the DU, or the RU. Optionally, the CU and the DU may exchange the inference result. Optionally, the DU and the RU may exchange the inference result. For example, the near-real-time RIC submits the inference result to the DU, and the DU forwards the inference result to the RU.

As shown in FIG. 3B, in a second possible implementation, a non-real-time RIC is located outside an access network device (optionally, the non-real-time RIC may be located in an OAM or a core network device), and is configured to perform model learning and inference. For example, the non-real-time RIC is configured to train an AI model, and perform inference by using the model. For example, the non-real-time RIC may obtain network-side and/or terminal-side information from at least one of a CU, a DU, or an RU, and the information may be used as training data or inference data. An inference result may be submitted to at least one of the CU, the DU, or the RU. Optionally, the CU and the DU may exchange the inference result. Optionally, the DU and the RU may exchange the inference result. For example, the non-real-time RIC submits the inference result to the DU, and the DU forwards the inference result to the RU.

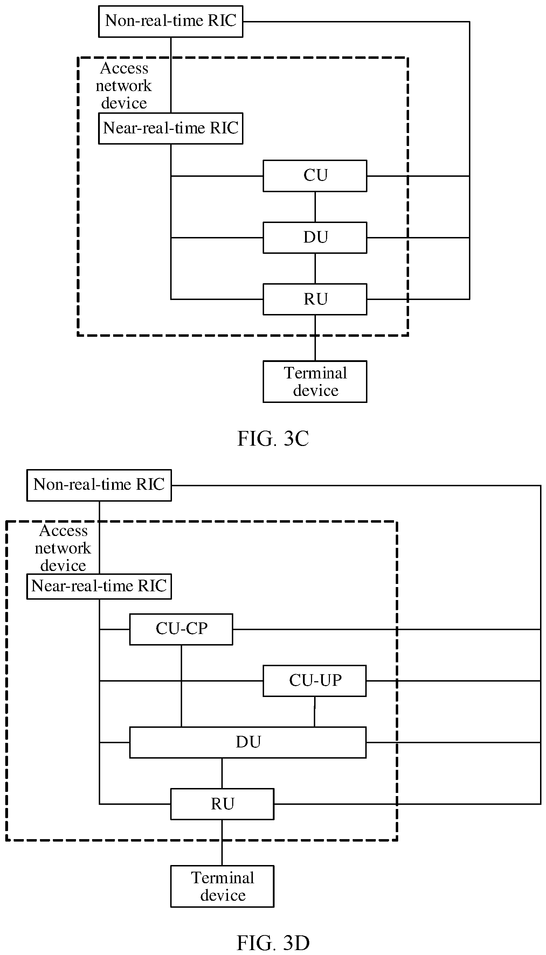

As shown in FIG. 3C, in a third possible implementation, an access network device includes a near-real-time RIC, and a non-real-time RIC is located outside the access network device (optionally, the non-real-time RIC may be located in an OAM or a core network device). The non-real-time RIC may be configured to perform model learning and inference. This is the same as the second possible implementation. In addition/alternatively, the near-real-time RIC may be configured to perform model learning and inference. This is the same as the first possible implementation. In addition/alternatively, the near-real-time RIC may obtain AI model information from the non-real-time RIC, obtain network-side and/or terminal-side information from at least one of a CU, a DU, or an RU, and obtain an inference result by using the information and the AI model information. Optionally, the near-real-time RIC may submit the inference result to at least one of the CU, the DU, or the RU. Optionally, the CU and the DU may exchange the inference result. Optionally, the DU and the RU may exchange the inference result. For example, the near-real-time RIC submits the inference result to the DU, and the DU forwards the inference result to the RU. For example, the near-real-time RIC is configured to train a model A, and perform inference by using the model A. For example, the non-real-time RIC is configured to train a model B, and perform inference by using the model B. For example, the non-real-time RIC is configured to train a model C, and submit the model C to the near-real-time RIC. The near-real-time RIC performs inference by using the model C.

FIG. 3D is an example diagram of a network architecture to which a method according to this disclosure can be applied. In comparison with FIG. 3C, a CU in FIG. 3D is split into a CU-CP and a CU-UP.

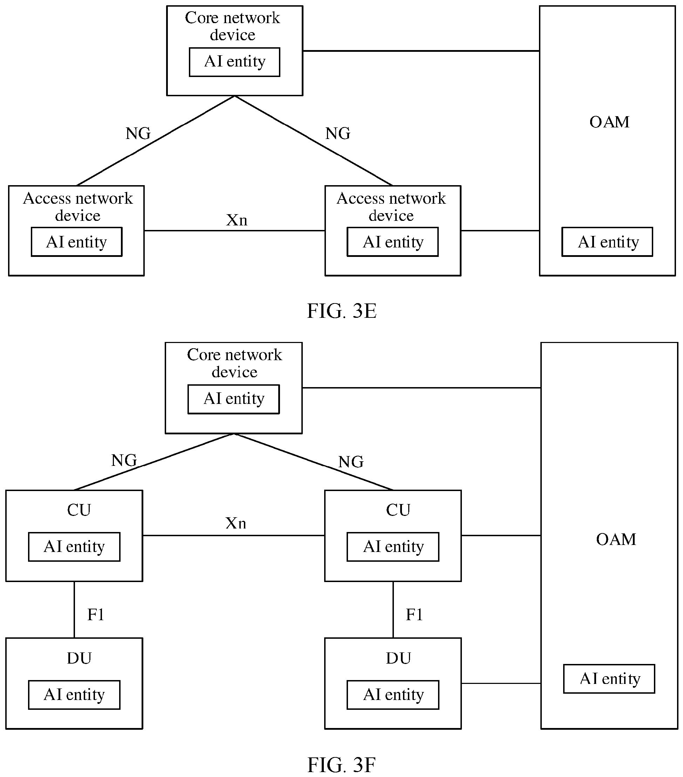

FIG. 3E is an example diagram of a network architecture to which a method according to this disclosure can be applied. As shown in FIG. 3E, optionally, an access network device includes one or more AI entities, and a function of the AI entity is similar to that of the near-real-time RIC above. Optionally, an OAM includes one or more AI entities, and a function of the AI entity is similar to that of the non-real-time RIC above. Optionally, a core network device includes one or more AI entities, and a function of the AI entity is similar to that of the non-real-time RIC above. When both the OAM and the core network device include the AI entity, models obtained through training by the AI entities of the OAM and the core network device are different, and/or models used by the AI entities for inference are different.

FIG. 3F is an example diagram of a network architecture to which a method according to this disclosure can be applied. In comparison with FIG. 3E, an access network device in FIG. 3F is split into a CU and a DU. Optionally, the CU may include an AI entity, and a function of the AI entity is similar to that of the near-real-time RIC above. Optionally, the DU may include an AI entity, and a function of the AI entity is similar to that of the near-real-time RIC above. When both the CU and the DU include the AI entity, models obtained through training by the AI entities of the CU and the DU are different, and/or models used by the AI entities for inference are different. Optionally, the CU in FIG. 3F may be further split into a CU-CP and a CU-UP. Optionally, one or more AI models may be deployed in the CU-CP. Optionally, one or more AI models may be deployed in the CU-UP.

Optionally, as described above, in FIG. 3E or FIG. 3F, an OAM for the access network device and an OAM for the core network device may be separately deployed.

The network architecture and a service scenario described in this disclosure are intended to describe the technical solutions in this disclosure more clearly, and do not constitute a limitation on the technical solutions provided in this disclosure. A person of ordinary skill in the art may know that, with evolution of the network architecture and emergence of a new service scenario, the technical solutions provided in this disclosure are also applicable to a similar technical problem.

Application of artificial intelligence to a wireless communication system can significantly improve performance of the communication system. When a network device communicates with a terminal device, signal processing manners usually match each other. For example, one device sends a signal, and the other device receives the signal. For another example, one device encodes a signal, and the other device correspondingly decodes the signal. Therefore, in most scenarios, the network device and the terminal need to use intelligent models that match each other, to improve wireless communication performance. For example, in a channel state information (channel state information, CSI) feedback scenario, the terminal device compresses CSI by using a CSI compression model, and the access network device restores the CSI after processing a received compressed signal by using a CSI restoration model.

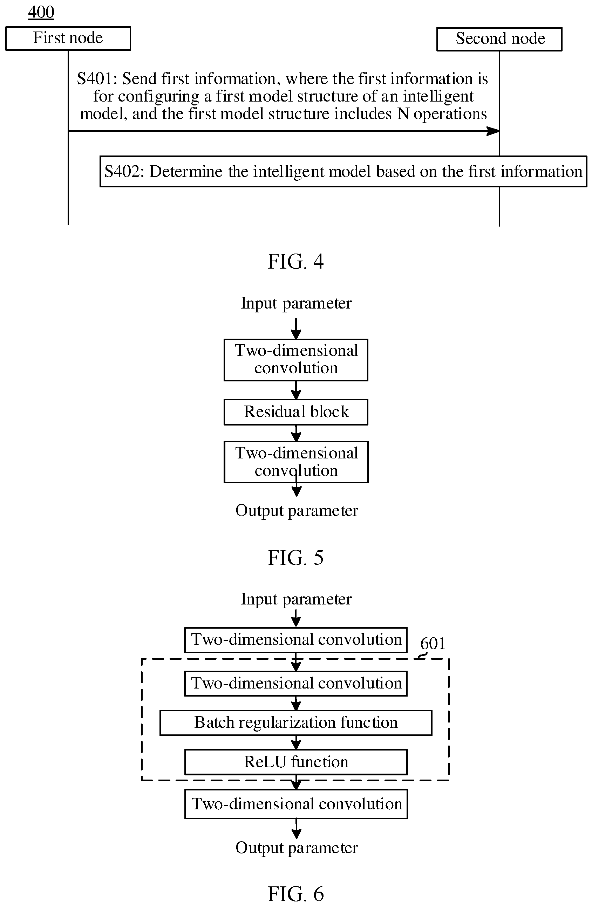

To meet a performance requirement, in a communication system, communication devices may exchange information about an intelligent model. For example, the intelligent model is specified by a network side for a terminal device, or is notified by a terminal device to a network side after training. For example, a network device (for example, an access network device, a core network device, or an OAM) may configure an intelligent model for the terminal device, or the core network device or the OAM separately notifies the access network device and the terminal device of intelligent models to be respectively used by the access network device and the terminal device. In the foregoing process, how to efficiently exchange model information is a study-worthy technical problem. Therefore, this disclosure provides a method shown in FIG. 4.

FIG. 4 is a schematic flowchart of a communication method according to this disclosure. A first node shown in FIG. 4 may be an access network device or an apparatus (for example, a chip or a module) configured in the access network device, and a second node may be a terminal or an apparatus (for example, a chip or a module) configured in the terminal. However, this disclosure is not limited thereto. For example, the first node may alternatively be a core network node, and the second node may be an access network node.

S401: The first node sends first information to the second node, where the first information is for configuring a first model structure of an intelligent model, the first model structure includes N operations, and N is a positive integer.

Correspondingly, the second node receives the first information from the first node.

The intelligent model may also be referred to as an AI model. The intelligent model may be a machine learning model, for example, a neural network model (for example, a deep neural network model), a random forest model, a k-means model, a support vector machine model, or a decision tree model. This is not limited in this disclosure.

In an implementation, that the first information is for configuring a first model structure of an intelligent model may be understood as: The first information is for configuring the first model structure, and the first model structure is a component of the intelligent model, where this is alternatively described as that the first model structure is a partial model of the intelligent model. The second node may obtain the first model structure based on the first information. The first model structure is used by the first node to configure the intelligent model. For example, after configuring the first model structure, the first node may configure the intelligent model by quoting identification information of the model structure.

In another implementation, that the first information is for configuring a first model structure of an intelligent model may alternatively be understood as: The first information is for configuring the intelligent model, and is specifically for configuring the first model structure included in the intelligent model. The first model structure may be a complete model structure of the intelligent model or a partial model structure of the intelligent model. This is not limited. Optionally, when the first model structure is the partial model structure of the intelligent model, another model structure of the intelligent model may be further configured by using the first information.

Optionally, the model structure may be described as a model.

The operation is a calculation for obtaining an output parameter by using an operation parameter and an operator. The operator is an operation rule or a function. For example, the operator may be a simple operation rule, for example, addition, subtraction, multiplication, division, or exponentiation. Alternatively, the operator may be a complex operation rule, for example, a convolution operator, that integrates a plurality of simple operation rules. The operator may be represented by a virtual parameter. The virtual parameter may also be referred to as a formal parameter or a placeholder parameter. The virtual parameter of the operator has no specific meaning or value, and mainly expresses the operation rule or the function. For example, the addition operator represents an operation rule or a function of C=A+B. To be specific, the addition operator needs two virtual parameters such as A and B, and one virtual parameter, namely, C, can be obtained by using the addition operator. A, B, and C are for describing the addition operator, and are not intended to limit specific meanings and values. The operation is instantiation of the operator, to be specific, the operation is a calculation for assigning an instantiated operation to the operator to obtain the output parameter, in other words, the operation is a calculation for obtaining the output parameter by using a specific operation parameter and a specific operator. In other words, the operation is a specific calculation or operation, and the operation parameter is a parameter used when an actual calculation is performed, namely, instantiation or assignment of a parameter of the operator.

For example, an operation is $O=W \times L$, where an operator used in the operation is multiplication, W and L are operation parameters of the operation, and O is an output parameter of the operation. One operation may use one or more operation parameters, and one or more output parameters may be obtained through one operation. The output parameter is a calculation result of the operation, and may also be referred to as an output result or an output (output). This is not limited in this disclosure.

One model structure (for example, the first model structure) usually includes a plurality of operations. The plurality of operations may be associated with each other. Different operations having a connection relationship may be reflected by a relationship between an operation parameter and an output parameter. For example, a model structure includes the following multiplication operation:

$$O1=W1 \times L1$$

In the multiplication operation, a used operator is multiplication, two used operation parameters are respectively the matrix W1 and the matrix L1, and W1 is multiplied by L1 to obtain the output parameter O1 of the operation. In addition, the model structure further includes the following convolution operation:

$$O2=W2 \otimes O1$$

Two operation parameters in the convolution operation are respectively the matrix W2 and the matrix O1, and $\otimes$ represents that an operator of the convolution operation is convolution. The output parameter O1 of the foregoing multiplication operation is an operation parameter of the convolution operation. This may reflect a connection relationship between the multiplication operation and the convolution operation. In other words, the convolution operation is performed after the multiplication operation, and the output parameter O1 of the multiplication operation is used as the operation parameter of the convolution operation to obtain the output parameter O2. The operation parameter O1 of the convolution operation may be referred to as an input parameter. W1 and W2 in the foregoing multiplication operation and convolution operation are not output parameters of another operation, and are not input parameters of the model structure. In this case, both W1 and W2 may be referred to as model parameters. In other words, an operation parameter of an operation may include an input parameter and/or a model parameter.

In this disclosure, if an operation parameter of an operation is an output parameter of another operation, the operation parameter may be referred to as an input parameter of the operation. Alternatively, if an operation parameter of an operation is an input parameter of a model structure, the operation parameter may also be referred to as an input parameter. For example, it is configured by using the first information that an input parameter of the first model structure includes L1, and L1 is used as the operation parameter of the multiplication operation in the foregoing multiplication operation. Therefore, L1 may also be referred to as an input parameter of the multiplication operation.

An input parameter of an operation is a parameter that changes with an input parameter of a model structure or an output parameter of another operation. The input parameter may also be referred to as a non-independent parameter. This is not limited in this disclosure. Optionally, it may be considered that the input parameter of the operation comes from outside of the operation. For a model structure, an input parameter of the model structure or an output parameter of an operation in the model structure may be used as an input parameter of one or more operations in the model structure. The input parameter may also be referred to as an input (input) for short. The output parameter may also be referred to as an output (output) for short.

A model parameter of an operation is a parameter defined or configured for the operation. The parameter is neither an output parameter of another operation in a model structure including the operation nor an input parameter of the model structure including the operation. The model parameter is a parameter that does not change with the input parameter of the model structure or the output parameter of the another operation. The model parameter may also be referred to as an independent parameter. This is not limited in this disclosure. Optionally, it may be considered that the model parameter of the operation comes from inside of the operation.

Optionally, for one of the N operations in the first model structure, the first information indicates an operator and an operation parameter that are used in the operation.

For example, the first information may include operation information. For an operation, the operation information indicates an operator and an operation parameter that are used in the operation. For example, the first information includes operation information n. This may be represented below. It should be understood that the first information may further include other information that is not shown.

```
First information: {
   operation information n: {operator information, operation parameter information},
   ...}
```

The operation information n indicates an operation n in the N operations in the first model structure. A value of n ranges from 0 to N-1 or ranges from 1 to N. The operation information n includes the operator information and the operation parameter information. The operator information indicates an operator used in the operation n. For example, the operator information may include identification information of the operator. For example, the identification information may be a name, a number, or the like of the operator. However, this disclosure is not limited thereto. The identification information corresponding to the operator may be predefined, or the first node and the second node may reach, through information exchange, a consensus on the identification information corresponding to the operator. For example, the first node may notify the second node of the identification information corresponding to the operator, or the second node may notify the first node of the identification information corresponding to the operator, so that the first node and the second node reach the consensus on the identification information of the operator.

In this disclosure, when a feature is numbered, a value of a number may start from 0, or may start from 1. This is not limited. For example, the value of n ranges from 0 to N-1 or ranges from 1 to N.

In this disclosure, when information is represented as an example, for example, when information such as the first information is represented, "..." is used in the information to indicate that the information may further include other information that is not shown. In other words, the information represented as an example in this disclosure includes but is not limited to shown information.

For example, the identification information of the operator is the name, and the operator information in the operation information n may indicate that the operator used in the operation n is multiplication. This may be represented as follows:

```
Operation information n: { operator information: f multiplication}, operation parameter
      information}
```

Alternatively, the identification information of the operator is the number, and a number of multiplication is 2. In this case, the operation information n may be represented as follows:

```
Operation information n: {operator information: f 2}, operation parameter information}
```

Optionally, for an operation, operation information of the operation further includes attribute information. The attribute information indicates an attribute of an operator used in the operation, in other words, the attribute information in the operation information indicates a value of an attribute of an operator used in the operation.

For example, the operator is exponentiation, and an operation using exponentiation is for exponentiating an operation parameter of the operation to obtain an output parameter. For example, if the operation parameter of the operation is x, and the operation is exponentiating x, the operation information may include attribute information, and the attribute information indicates an exponent of the exponentiation. For example, if the attribute information indicates that the exponent is 3, it indicates that the operation is calculating a third power of the operation parameter x, namely, $x^3$.

In this disclosure, the attribute information of the operator and the model parameter of the operation may be considered as a same type of information, for example, both are considered as attribute information or model parameters.

For another example, the operator is LeakyReLU, LeakyReLU is a common nonlinear activation function, and a specific operation rule of the function is LeakyReLU(x)=max(0, x)+a×min(0, x), where max(0, x) represents selecting a larger value in 0 and x, and min(0, x) represents selecting a smaller value in 0 and x. In other words, the operation rule is: LeakyReLU(x)=x when x is greater than or equal to 0, and LeakyReLU(x)=a×x when x is less than 0. In this case, the operation information may include attribute information, and the attribute information indicates a value of a.

For another example, the operator is convolution, and the attribute information may include but is not limited to one or more of the following attributes:

a size of a convolution kernel, a padding (padding) mode of an input parameter, an operation stride (stride), or a relationship between elements of the convolution kernel.

The operation stride is a length of each movement of the convolution kernel in a convolution operation process. The relationship between the elements of the convolution kernel may be a dilation (dilation) size of the convolution kernel, to be specific, 0 is padded between the elements of the convolution kernel.

The attribute information may indicate one or more of the foregoing attributes of the convolution. For example, the attribute information may indicate a value of the attribute of the convolution operator. Alternatively, a plurality of attribute sets of the convolution operator that are enumerated in Table 1 may be predefined or preconfigured. Each attribute set includes one index. The attribute information may indicate the attribute of the convolution operator by indicating identification information (for example, the index) of one of the attribute sets.

For example, the attribute information may indicate an index 1. After receiving the attribute information, the second node may determine, based on the index and the plurality of attribute sets enumerated in Table 1, that the attribute of the convolution operator includes: The size of the convolution kernel is $3\times1$, the operation stride of the convolution is $1\times2$, padding is 0, and the dilation size of the convolution kernel is $2\times1$.

**Table 1**

| Index | Convolution kernel | Operation stride (stride) | Padding (padding) | Dilation (dilation) of the convolution kernel |
|---|---|---|---|---|
| 0 | $3\times1$ | 1 | 1 | 1 |
| 1 | $3\times3$ | $1\times2$ | 0 | $2\times1$ |
| 2 | $1\times3$ | 1 | $1\times2$ | $2\times2$ |
| 3 | $1\times3$ | 1 | $(1, 2)\times(2, 1)$ | $2\times2$ |
| ... | | | | |

After obtaining the attribute information, the second node may determine that the size of the convolution kernel of the convolution is three rows and three columns, determine, based on that the operation stride of the convolution is $1\times2$, that the convolution kernel moves by one row and two columns each time, and determine, based on that the padding is 0, not to pad the operation parameter. That the dilation size of the convolution kernel is $2\times1$ indicates that two 0s are padded between every two elements in the $1^{st}$ dimension of the convolution kernel, and one 0 is padded between every two elements in the $2^{nd}$ dimension of the convolution kernel. For example, the convolution kernel including three rows and three columns in this example is as follows:

$$\begin{bmatrix} 1 & 2 & 3 \\ 4 & 5 & 6 \\ 7 & 8 & 9 \end{bmatrix}.$$

Based on that the dilation size of the convolution kernel is $2\times1$, a dilated convolution kernel with a size of seven rows and five columns can be obtained as follows:

$$\begin{bmatrix} 1 & 0 & 2 & 0 & 3 \\ 0 & 0 & 0 & 0 & 0 \\ 0 & 0 & 0 & 0 & 0 \\ 4 & 0 & 5 & 0 & 6 \\ 0 & 0 & 0 & 0 & 0 \\ 0 & 0 & 0 & 0 & 0 \\ 7 & 0 & 8 & 0 & 9 \end{bmatrix}.$$

The padding of $1 \times 2$ enumerated in Table 1 indicates that one row is padded to each of a head and a tail of the 1st dimension of the operation parameter, and two rows are padded to each of a head and a tail of the 2nd dimension of the operation parameter. The padding of $(1, 2) \times (2, 1)$ indicates that one row of 0s is padded to a head of the 1st dimension, two rows of 0s are padded to a tail of the 1st dimension, two rows of 0s are padded to a head of the 2nd dimension, and one row of 0s is padded to a tail of the 2nd dimension. Implementations of other values of the attributes in Table 1 are similar, and reference may be made to the foregoing descriptions. For brevity, details are not described herein again.

If the first information does not indicate the attribute of the operator, the second node may use a default attribute of the operator. For example, the second node may use a predefined attribute set. For example, the index 0 in Table 1 may be used as the default attribute. When the first information does not indicate an attribute of the convolution in an operation, the second node performs the convolution operation by using values of attributes corresponding to the index 0.

An operation parameter of an operation may include an input parameter and/or a model parameter. The following first describes a manner of configuring the model parameter.

Optionally, the first information may indicate a parameter value of the model parameter and/or identification information of the model parameter.

In an implementation, the first information may indicate the parameter value of the model parameter.

For example, the operator of the operation n is multiplication, an operation parameter of the operation n includes a model parameter, and the operation parameter information of the operation n may indicate that a parameter value of the model parameter is X. After receiving the first information, the second node may determine that the operator of the operation n is multiplication and the operation parameter includes the model parameter whose parameter value is X. The second node may determine that the operation n is multiplication of X by another operation parameter of the operation n, to obtain an output parameter of the operation n.

Optionally, the first information indicates dimension information and/or parameter type information of the model parameter.

The first information may indicate a parameter type of the model parameter, and the parameter type of the model parameter may include but is not limited to a scalar, a vector, a matrix, or a tensor. The first information may further include the dimension information of the model parameter to indicate a dimension of the model parameter. In an example, when the model parameter is a one-dimensional parameter, the first information does not include the dimension information of the model parameter. When the model parameter has more than one dimension, the first information includes the dimension information of the model parameter. Alternatively, regardless of whether the model parameter is one-dimensional, the first information may include the dimension information of the model parameter. However, this disclosure is not limited thereto.

For example, the model parameter of the operation n in the first model structure includes a model parameter 1, model parameter information of the operation n includes type information and dimension information of the model parameter 1, and the operation information n may be represented as follows:

```
Operation information n: {
  operator information: {multiplication},
  operation parameter information: {model parameter 1: {type: matrix, dimension: (20,
  25)}, ...}
  ...}
```

The operation parameter information indicates that a type of the model parameter 1 is a matrix, and indicates that a dimension of the parameter 1 is a $20 \times 25$ matrix. The operation parameter information may further include a parameter value of the model parameter 1, namely, a value of each element in the matrix. In the operation parameter information, the values of the elements may be sorted in a preset order, for example, sequentially sorted in an order of a first dimension and then a second dimension. For example, the first dimension may be a row, and the second dimension may be a column. However, this disclosure is not limited thereto, and the values of the elements may alternatively be in another sorting order agreed by the first node and the second node.

In another implementation, the first information may indicate the identification information of the model parameter.

In an example, the first information may indicate identification information of a model parameter in a predefined candidate set.

For example, for a model parameter, a candidate set of the model parameter may be predefined according to a protocol. The candidate set includes one or more candidate values, and each candidate value corresponds to one piece of unique identification information. When the first node configures a value of the model parameter for the second node, the first node indicates an identifier in the candidate set by using the identification information, to notify the second node that the parameter value of the model parameter is a candidate value corresponding to the identifier. After receiving the first information, the second node determines the parameter value of the model parameter based on the identification information of the model parameter and the candidate set.

In another example, for a model parameter, the first node sends second information to the second node, where the second information indicates a candidate set of a parameter value of the model parameter. The candidate set includes one or more candidate values, and each candidate value corresponds to one piece of unique identification information. The second node obtains the candidate set based on the received second information. The second node may determine the parameter value of the model parameter based on the first information and the second information. This is similar to the foregoing example.

For example, the second information includes candidate value information corresponding to each candidate value in the candidate set, and the candidate value information may indicate one candidate value and an identifier of the candidate value. For example, the second information may be represented as follows:

```
Second information: {
   candidate value information 1: {identification information 1, X, ...},
   candidate value information 2: {identification information 2, Y, ...},
   ...}
```

The second information includes the candidate value information 1 and the candidate value information 2, the candidate value information 1 indicates the candidate value X, and the candidate value information 1 further indicates that identification information of the candidate value X is the identification information 1. The candidate value information 2 indicates the candidate value Y, and the candidate value information 2 further indicates that identification information of the candidate value Y is the identification information 2.

Optionally, the second information may further include identification information of the candidate set. When configuring the first model structure, the first node may indicate the candidate set by quoting the identification information of the candidate set. For example, the second information may be represented as follows:

```
Second information: {identification information of the candidate set, candidate value
information 1, candidate value information 2, ...}
```

Optionally, the second information may further indicate dimension information and/or parameter type information of the model parameter. For a specific indication manner, refer to the foregoing manner in which the first information indicates the dimension information and/or the parameter type information of the model parameter. For brevity, details are not described herein again.

Specific implementations in which the second node determines the parameter value of the model parameter of the first model structure based on the first information and the second information may include but are not limited to the following example A and example B.

Example A: The first node may send the first information and the second information to the second node. The second node may determine the first model structure based on the first information, and determine, based on the second information, the candidate set including one or more candidate values. The first node further sends indication information A to the second node, to indicate, by using the indication information A, that the parameter value of the model parameter in the first model structure is a candidate value in the candidate set.

The first information sent by the first node to the second node may be represented as follows:

```
First information:
{
        model structure information: {
            identification information of the model structure: {first model structure},
            operation information 1: {operator information, operation parameter information:
 {model parameter 1: identification information 1, ...}, ...},
            operation information 2: {operator information, operation parameter information:
 {model parameter 2: identification information 2, ...}, ...},
```

```
    ...},
...}
```

In addition, the second information sent by the first node to the second node may be represented as follows:

```
Second information: {
    identification information of the candidate set: {candidate set 1}
    candidate value information 1: {identification information A, X, ...},
    candidate value information 2: {identification information B, Y, ...},
    ...}
```

The operation included in the first model structure and a parameter of each operation are configured in the model structure information in the first information, but a parameter value of each parameter is not specifically configured. For example, identification information of a model parameter of each operation in the first model structure is configured in the model structure information. Identification information of the model parameter 1 in the operation information 1 is the identification information 1, and identification information of the model parameter 2 in the operation information 2 is the identification information 2. In addition, the first node configures, for the second node by using the second information, the candidate set 1 including a plurality of candidate values. In the second information, it is configured by using the candidate value information 1 that the candidate set 1 includes the candidate value X and identification information of the candidate value X is the identification information A, and it is configured by using the candidate value information 2 that the candidate set 1 includes the candidate value Y and identification information of the candidate value is the identification information B. The first node further sends indication information A to the second node, where the indication information A indicates that the parameter value of the model parameter in the first model structure is a parameter value in the candidate set 1. For example, the indication information A may be represented as follows:

```
Indication information A: {
    identification information 1 identification information A,
    identification information 2=identification information B, ...}
```

The foregoing indication information A indicates identification information of the first model structure and identification information of the candidate set 1, to indicate that the parameter value of the model parameter of the first model structure is a candidate value in the candidate set 1. Specifically, "=" indicates an equivalence relationship between the identification information. For example, "identification information 1 identification information A" in the indication information A indicates that a parameter value of the model parameter 1 identified by the identification information 1 is the candidate value X identified by the identification information A, and "identification information 2=identification information B" indicates that a parameter value of the model parameter 2 identified by the identification information 2 is the candidate value Y identified by the identification information B.

In an optional implementation of the example A, the first information, the second information, and the indication information A in the example A may be separately sent by the first node to the second node.

For example, after sending the first information and the second information to the second node, the first node sends configuration information of an intelligent model to the second node, where the configuration information of the intelligent model is for configuring a first intelligent model, and the first intelligent model includes the first model structure. The configuration information of the intelligent model may include the indication information A. The configuration information of the intelligent model may be represented as follows:

```
Configuration information of the first intelligent model: {
    identification information of the model structure: {first model structure}, ...,
    identification information of the candidate set: {candidate set 1},
    indication information A, ...}
```

The foregoing configuration information of the first intelligent model indicates, by using the identification information of the model structure, that the first intelligent model includes the first model structure, and indicates, by using the identification information of the candidate set, that the candidate set of the parameter value is the candidate set 1. The configuration information of the first intelligent model further includes the indication information A. After receiving the configuration information, the second node may determine that the first intelligent model includes the first model structure. The second node may further determine that the candidate set of the parameter value of the model parameter in the intelligent model is the candidate set 1, and may determine the parameter value of the model parameter in the first model structure based on the indication information A.

In another optional implementation of the example A, the first information, the second information, and the indication information A in the example A may all be carried in configuration information that is of a first intelligent model and that is sent by the first node to the second node. For example, the first node sends the configuration information of the first intelligent model to the second node, where the configuration information of the intelligent model includes the first information, the second information, and the indication information A. The configuration information of the intelligent model may be represented as follows:

```
Configuration information of the first intelligent model: {first information, second
information, indication information A, ...}
```

For specific content included in the first information, the second information, and the indication information A, refer to the foregoing descriptions. For brevity, details are not described herein again.

Example B: The first node may send the first information and the second information to the second node. The second node may determine the first model structure based on the first information. The second information includes identification information of the first model structure. This indicates that the candidate set indicated by the second information is specifically a set of parameter values of the model parameter of the first model structure.

For example, the first information and the second information that are sent by the first node to the second node may be respectively represented as follows:

```
First information: {
   model structure information: {
      identification information of the model structure: {first model structure},
      operation information 1: {operator information, operation parameter information:
{model parameter 1: identification information 1, ...}, ...},
      operation information 2: {operator information, operation parameter information:
{model parameter 2: identification information 2, ...}, ...}
         ...},
      ...}
   Second information: {
      identification information of the candidate set: {candidate set 1}
      identification information of the model structure: {first model structure},
      candidate value information 1: {identification information 1, X, ...},
      candidate value information 2: {identification information 2, Y, ...},
         ...}
```

The first model structure is configured in the model structure information in the first information, but a parameter value of each parameter is not specifically configured. The second information sent by the first node to the second node includes the identification information of the first model structure. This indicates that the candidate set indicated by the second information includes the parameter value of the model parameter of the first model structure. The candidate value information 1 indicates the identification information 1 and the candidate value X identified by the identification information 1. The second node determines, based on that the model parameter 1 in the first information corresponds to the identification information 1, that a parameter value of the model parameter 1 is the candidate value X. It may be understood that the identification information 1 identifies the model parameter 1 in the first information and identifies the candidate value X in the second information, so that the second node may determine, based on the identification information 1, that the parameter value of the model parameter 1 is X. Similarly, the second node may determine, based on the identification information 2 indicated by the candidate value information 2, that a parameter value of the identified model parameter 2 in the first model structure is Y

The first information and the second information in the example B may be separately sent by the first node to the second node. For example, the first node may first send the first information to the second node, and then send configuration information of an intelligent model to the second node, where the intelligent model configured by using the configuration information includes the first model structure, and the configuration information includes the second information. The second node may determine the parameter value of the model parameter of the first model structure in the intelligent model based on the second information in the configuration information. However, this disclosure is not limited thereto. The first information and the second information may be carried in same configuration information. For example, both the first information and the second information are included in configuration information of a model structure, or the first information sent by the first node to the second node may include the second information. For example, the first information may be represented as follows:

```
First information: {
   model structure information: {
      operation information 1: {operator information, operation parameter information:
{model parameter 1: identification information 1, ...}, ...},
      operation information 2: {operator information, operation parameter information:
{model parameter 2: identification information 5, ...}, ...},
         ...}
```

```
second information: {
    candidate value information 1: {identification information 1, X, ...},
    candidate value information 5: {identification information 5, Y, ...}...},
}
```

For the model structure information in the first information and the second information, the model structure information indicates the first model structure, and the second information indicates the candidate set of the parameter value of the model parameter. The second information includes a plurality of pieces of candidate value information, and one piece of candidate value information may indicate one candidate value and identification information of the candidate value. For example, the second information includes the candidate value information 1 and the candidate value information 5. The candidate value information 1 indicates the identification information 1 and the candidate value X identified by the identification information 1. The candidate value information 5 indicates the identification information 5 and the candidate value Y identified by the identification information 5. The second node may determine, based on that the model structure information in the first information indicates that identification information of the model parameter 1 is the identification information 1, and that the second information indicates that identification information of the candidate value X is the identification information 1, that the parameter value of the model parameter 1 is X. Alternatively, it may be understood that the operation information 1 indicates, by using the identification information 1, that the parameter value of the model parameter 1 is the candidate value X identified by the identification information 1 in the second information. This is not limited in this disclosure.

Optionally, the candidate value information may further indicate a dimension and/or a type of the parameter. The second information may further include other candidate value information that is not shown. The model structure information includes operation information corresponding to each of the N operations in the first model structure, and the operation information may indicate identification information of a parameter in the candidate set. The second node may determine, based on the identification information indicated by the operation information, that the parameter value of the model parameter is a parameter value corresponding to the identification information in the candidate set. For example, the operation parameter information in the operation information 1 indicates that a parameter identified by the identification information 1 is the model parameter 1 of the operation. The second node may determine, based on the identification information 1, that the parameter value of the model parameter 1 is the parameter value X corresponding to the identification information 1 in the second information. For another example, the operation parameter information in the operation information 2 indicates that a parameter identified by the identification information 5 is the model parameter 2 of the operation. The second node may determine, based on the identification information 5, that the parameter value of the model parameter 2 is the parameter value Y corresponding to the identification information 5 in the second information.

In this disclosure, different model parameters of the first model structure may correspond to a same candidate set, or may correspond to different candidate sets. This is not limited. For example, the first model structure includes a model parameter A, a model parameter B, and a model parameter C, the model parameter A and the model parameter B may correspond to a same candidate set A, and the model parameter C may correspond to another candidate set B. For a specific configuration manner, refer to the foregoing example in which the first node may configure the parameter value of the model parameter by quoting the identification information of the candidate value in the candidate set (for example, the identification information of the candidate values in each candidate set is different) or by quoting the identification information of the candidate set and the identification information of the candidate value in the candidate set.

The foregoing describes the manner of configuring the model parameter in the operation parameter of the operation. As described above, an input parameter of one operation may be an output parameter of another operation, or may be the input parameter of the first model structure. The following describes a manner of configuring an association relationship between the input parameter and the output parameter in the first model structure, namely, a manner of configuring an association relationship between operations.

Optionally, the first model structure includes a first operation and a second operation, and the first information indicates that an operation parameter of the first operation includes an output parameter of the second operation. In other words, the first information indicates that an input parameter of the first operation includes the output parameter of the second operation. Specifically, the following three implementations may be included but constitute no limitation.

Implementation 1: A sorting order of the operation information of the N operations in the first information represents the association relationship between the operations.

For example, the first model structure includes an operation n and an operation n+1, and the first information includes operation information n indicating the operation n and operation information n+1 indicating the operation n+1. In the first information, the operation information n may be sorted before the operation information n+1. In this case, it indicates that an output parameter of the operation n (namely, an example of the second operation) is used as an input parameter of the operation information n+1 (namely, an example of the first operation). For example, the first information may be represented as follows:

```
First information: {
```

```
operation information n: {operator information: f multiplication}, operation
parameter information: {model parameter 1}},
operation information n+1: {operator information: {convolution}, operation
parameter information: {model parameter 2}},
...}
```

After receiving the first information, the second node may determine, based on that the operation information n+1 is sorted after the operation information n in the first information, that the input parameter of the operation n+1 includes the output parameter (denoted as an output parameter n) of the operation n. In addition, if the second node determines, based on the operation parameter information in the operation information n+1, that an operation parameter of the operation n+1 further includes a model parameter 2, the second node determines that the operation n+1 is an operation for performing convolution on the output parameter n and the model parameter 2 to obtain an output parameter.

In the foregoing example, for the operation n, in an example, operation information n-1 corresponding to an operation n-1 may be included before the operation information n in the first information. In this case, an operation parameter of the operation information n may include an output parameter (denoted as an output parameter n-1) of the operation n-1. Because the operation parameter of the operation n further includes the model parameter 1, the operation n is an operation for multiplying the output parameter n-1 by the model parameter 1. In another example, if the operation n is the 1st operation in the first model structure, the input parameter of the first model structure is an input parameter (denoted as an input parameter 0) of the operation n, and the operation n is an operation for multiplying the input parameter 0 by the model parameter 1.

Implementation 2: Operation information corresponding to the first operation in the first information includes identification information of the output parameter of the second operation.

Optionally, for an operation in the N operations in the first model structure, the first information indicates identification information of an output parameter of the operation.

For example, the first information includes operation information indicating an operation, and the operation information includes output parameter information indicating related information of an output parameter. For example, the related information of the output parameter may include but is not limited to identification information of the output parameter.

```
First information: {
    operation information n: {operator information, operation parameter information,
    output parameter information},
...}
```

Output parameter information of an operation n may include identification information of an output parameter of the operation n. Optionally, if the operation n includes a plurality of output parameters, the output parameter information includes identification information of each of the plurality of output parameters.

When configuring the model structure, the first node may quote the identification information of the output parameter to indicate the output parameter. For example, the identification information of the output parameter may be for configuring the association relationship between the operations. However, this disclosure is not limited thereto.

In an implementation, identification information of different output parameters in the first model structure is different. In other words, the identification information of the output parameter may uniquely identify the output parameter.

The first node may configure one piece of identification information for each output parameter of the operation in the first model structure. In the method, regardless of whether different output parameters in the first model structure belong to a same operation, identification information of the output parameters is different. In other words, each output parameter in the first model structure has unique identification information. For example, if the operation in the first model structure includes K output parameters in total, identification information of the K output parameters is different from each other.

In another implementation, identification information of different output parameters of a same operation is different, and identification information of output parameters of different operations may be the same or may be different. For an output parameter, identification information of an operation corresponding to the output parameter and identification information of the output parameter may uniquely identify the output parameter.

When the first node configures the identification information of the output parameter, identification information of different output parameters of a same operation in the first model structure is different, and identification information of output parameters of different operations may be the same or may be different. The first node configures one piece of identification information for each operation in the first model structure. Identification information of an operation and identification information of an output parameter in the operation may uniquely identify the output parameter. For example, the identification information of the output parameter is a number of the output parameter, and identification information configured by the first node for two output parameters of the operation n is a number 1 and a number 2 that are respectively denoted as an output parameter 1 and an output parameter 2. Identification information configured by the first node for an output parameter of an operation n+1 is a number 1. The identification information of the plurality of output parameters of the operation n is different, the identification information of the output parameter of the operation n+1 is the same as the identification information of one output parameter of the operation n, and the two output parameters may be distinguished by using the identification information of the operations. Optionally, when the operation n has only one output parameter, if the output parameter of the operation n needs to be quoted for another operation, the output parameter may be uniquely identified only by the identification information of the operation n.

The first information may include the operation information of the first operation. The operation information may notify, by indicating the identification information of the output parameter of the second operation, the second node that an operation parameter of the first operation includes the output parameter of the second operation. In other words, the output parameter of the second operation is used as an input parameter of the first operation.

In an example, identification information of different output parameters in the first model structure is different. The operation parameter information indicates an output parameter by indicating identification information of the output parameter.

For example, the first information includes the operation information n corresponding to the operation n and operation information n+1 corresponding to the operation n+1, and the first information may be represented as follows:

First information: {

...

operation information n: {

operator information: {addition},

operation parameter information: {output parameter 0, model parameter 1},

output parameter information: {output parameter 1, **output parameter 2**}},

operation information n+1: {

operator information: {convolution}

operation parameter information: {**output parameter 2**, model parameter 2}

output parameter information: {output parameter 3}},

...}

The operation information n includes the output parameter information, and the output parameter information is for configuring identification information of two output parameters of the operation n as the output parameter 1 and the output parameter 2 respectively. The operation information n+1 indicates, by using the operation parameter information, that an operation parameter of the operation n+1 includes an input parameter, where the input parameter is the output parameter 2 of the operation n. This indicates that the operation n+1 is after the operation n, and the operation parameter of the operation n+1 includes the output parameter 2 of the operation n. The second node may determine that the operation n+1 is an operation for performing convolution on the output parameter 2 and the model parameter 2 to obtain an output parameter, and may determine, based on the output parameter information in the operation information n+1, that identification information of the output parameter of the operation n+1 is the output parameter 3. This example is an example in which identification information of different output parameters in the first model structure is different. However, this disclosure is not limited thereto.

In another example, identification information of output parameters of a same operation in the first model structure is different, and identification information of output parameters of different operations may be the same. The operation parameter information indicates an output parameter by indicating identification information an operation and identification information of the output parameter in the operation.

For example, the first information includes operation information n corresponding to an operation n and operation information n+1 corresponding to an operation n+1, and the first information may be represented as follows:

First information: {

...

operation information n: {

identification information of the operation: {**operation n**},

operator information: {addition},

operation parameter information: {input parameter: {operation k, output parameter 0}, model parameter 1},

output parameter information: {output parameter 0, **output parameter 1**}},

operation information n+1: {

identification information of the operation: {operation n+1},

operator information: {convolution}

operation parameter information: {input parameter: {**operation n, output parameter 1**}, model parameter 2}

output parameter information: {output parameter 0}},

...}

The identification information that is of the operation and that is indicated by the operation information n is the operation n, and identification information of two output parameters of the operation n is respectively the output parameter 0 and the output parameter 1. The input parameter of the operation n+1 includes the output parameter 1 of the operation n. In this case, the operation parameter information of the operation n+1 indicates the identification information of the operation n and the identification information of the output parameter 1 in the operation n. In this way, the second node may determine that the input parameter of the operation n+1 includes the output parameter 1 of the operation n. It can be learned from the foregoing example that identification information of different output parameters in a same operation is different. For example, the identification information of the two output parameters in the operation n is different. The identification information of the 1st output parameter of the operation n and identification information of an output parameter of the operation n+1 are the same, and are both the output parameter 0. The output parameter may be uniquely identified by the identification information of the operation and the identification information of the output parameter. However, this disclosure is not limited thereto.

Implementation 3: The first information includes connection relationship information, and the connection relationship information indicates that the input parameter of the first operation includes the output parameter of the second operation.

For example, the first information may be represented as follows:

First information: {

...

operation information n−1: {operator information n−1, operation parameter information: {input parameter k, ...}, output parameter information: {**output parameter q, output parameter q+1**}}

operation information n: {operator information n, operation parameter information: {**input parameter k+1**, ...}, output parameter information: {**output parameter q+2**}},

operation information n+1: {operator information n+1, operation parameter information: {**input parameter k+2, input parameter k+3, ...**}, output parameter information: {output parameter q+3}},

...,

connection relationship information: {

**input parameter k+1=output parameter q,**

**input parameter k+2=output parameter q+1,**

**input parameter k+3=output parameter q+2, ...}}**

In this example, the connection relationship information indicates that the input parameter k+1 is the output parameter q, in other words, an input parameter in the operation information n includes the output parameter q in the operation information n-1. The input parameter k+2 is the output parameter q+1, and the input parameter k+3 is the output parameter q+2. This indicates that an input parameter in the operation information n+1 includes the output parameter q+1 of the operation information n-1 and the output parameter q+2 of the operation information n. After receiving the first information, the second node may determine the connection relationship between the operations in the first model structure based on the connection relationship information and the identification information of the input parameter and the identification information of the output parameter that are indicated by the operation information. However, this disclosure is not limited thereto.

Optionally, in this disclosure, if there is a sequence between a plurality of operation parameters needed by an operator, for an operation that uses the operator, a sequence of operation parameters indicated by operation parameter information corresponding to the operation sequentially corresponds to the sequence of the operation parameters needed by the operator.

For example, an operator A is a function integrating two operation rules: multiplication and addition. For example, the operator A is denoted as X×Y+Z, and a sequence of the three operation parameters needed by the operator A is sequentially {X, Y, Z}. If an operation B in the first model structure uses the operator A, and operation parameter information corresponding to the operation B in the first information needs to indicate three operation parameters, a sequence of the three operation parameters sequentially corresponds to X, Y, and Z. For example, operation information corresponding to the operation B is as follows:

```
Operation information B: {
    operator information: { operator A}
    operation parameter information: {operation parameter 1, operation parameter 2,
    operation parameter 3},
    ...}
```

After obtaining the operation information B, the second node determines, based on the operation information B, that the operation B indicated by the operation information B uses the operator A, and the operation parameter information

22

sequentially indicates the operation parameter 1, the operation parameter 2, and the operation parameter 3. In this case, the second node may determine that the three operation parameters sequentially correspond to the parameters {X, Y, Z} needed by the operator A, in other words, the operation parameter 1 is the parameter X needed by the operator A, the operation parameter 2 is the parameter Y needed by the operator A, and the operation parameter 3 is the parameter Z needed by the operator A. In other words,

Output parameter of the operation B=Operation parameter 1 ×Operation parameter 2+Operation parameter 3.

Optionally, the first information indicates the input parameter and/or an output parameter of the first model structure.

For example, the first information includes input parameter information of the first model structure, and the input parameter information indicates related information of the input parameter of the first model structure. For example, the input parameter information may include but is not limited to one or more of identification information, dimension information, precision information, or data type information of the input parameter of the first model structure. The input parameter information of the first model structure may include the identification information of the input parameter, and the identification information of the input parameter may be quoted when the first model structure is configured, to indicate the input parameter.

In an example, the first information may be represented as follows:

First information: {

   input parameter information of the first model structure: {input parameter 0, ...}

   operation information 1: {operator information, operation parameter information: {**input parameter 0**, ...}, output parameter information},

   ...

   operation information N: {operator information, operation parameter information, output parameter information: {**output parameter k**, ...}}

   output parameter information of the first model structure: {**output parameter k**, ...}, ...}

The identification information of the input parameter of the first model structure is configured as the input parameter 0 in the input parameter information of the first model structure. The operation parameter information in the operation information 1 indicates that an input parameter in an operation 1 includes the input parameter 0. This indicates that the input parameter of the operation 1 includes the input parameter 0 of the first model structure. The output parameter information in the operation information N indicates that an output parameter of an operation N is the output parameter k. The output parameter information of the first model structure indicates that identification information of the output parameter of the first model structure is the output parameter k. This indicates that the output parameter of the first model structure includes the output parameter k of the operation N. However, this disclosure is not limited thereto. For example, input information of an operation other than the operation 1 may also include the input parameter 0 of the first model structure, and/or the output parameter of the first model structure may further include another output parameter.

Alternatively, the first information may not indicate the input parameter and/or the output parameter of the first model structure. The first node may indicate the input parameter and/or the output parameter of the first model structure when quoting the first model structure (for example, quoting the first model structure to configure the intelligent model or configuring another model structure based on the first model structure). However, this disclosure is not limited thereto.

Optionally, for the output parameter information in the operation information and/or the output parameter information of the first model structure, the output parameter information may include dimension information of the output parameter, precision information of the output parameter, and/or type information of the output parameter.

The second node may determine a dimension of the output parameter based on the operation parameter of the operation and the calculation result of the operator. The output parameter of the model structure is an output parameter of one or more operations, and the second node may also determine a dimension of the output parameter of the first model structure. Alternatively, the output parameter information may include the dimension information of the output parameter. In an implementation, the first node indicates a dimension of the output parameter by using the dimension information, to check whether the obtained output parameter is correct. In another implementation, the first node may indicate a dimension of the output parameter by using the dimension information in the output parameter information of the operation, to notify the second node that the output parameter is a part of parameter values of an operation result of the operation. For example, when the output parameter is the part of parameter values of the operation result of the operation, the second node may determine the output parameter according to a predefined rule or a rule indicated by the first node by using signaling (for example, the first information or other information). If the operation result of the operation is a $20 \times 25$ matrix, the first information may indicate that the dimension of the output parameter is $20 \times 5$, and the second node may use values in first five columns in each row as the output parameter according to the predefined rule (for example, a rule predefined in a protocol or a rule agreed through interaction). Alternatively, the first node may indicate a dimension of the output parameter of the first model structure by using the dimension information in the output parameter information of the first model structure, to notify the second node to use, as the output parameter of the first model structure, a part of parameter values of an output parameter that is of an operation and that is indicated in the output parameter information of the first model structure. For example, the output parameter information of the first model structure indicates the output parameter k of the operation N, and a dimension of the output parameter k is $15 \times 3$. The dimension information in the output parameter information of the first model structure indicates that the dimension is $10 \times 3$, and values in first 15 rows in each column are used as the output parameter of the first model structure according to the predefined rule. However, this disclosure is not limited thereto.

The output parameter information may include the type information of the output parameter. For example, the type information may indicate that the output parameter is an integer, a decimal, or the like. In addition, the output parameter information may include the precision information of the output parameter, and the precision information may indicate quantization precision of the output parameter. The second node may quantize the output parameter based on the quantization precision indicated by the precision information.

Optionally, for the input parameter in the first model structure, for example, the input parameter of the operation and/or the input parameter of the first model structure, the first information may include dimension information of the input parameter, precision information of the input parameter, and/or type information of the input parameter. For example, operation parameter information in one piece of operation information may include dimension information and/or type information of an input parameter indicated by the operation information, or the input parameter information of the first model structure may include the dimension information and/or the type information of the input parameter of the first model structure. For details, refer to the foregoing manner of indicating the dimension and/or a type of the output parameter. For brevity, details are not described herein again.

Optionally, because there is the association relationship between the input parameter and the output parameter, the first node may configure, by using the first information, a dimension (and/or a type) of the input parameter or the output parameter in the first model structure, and the second node may determine a dimension (and/or a type) of the other parameter by using the association relationship between the input parameter and the output parameter. For example, the first node configures a dimension (and/or a type) of the output parameter of the operation in the first model structure and a dimension (and/or a type) of the input parameter of the first model structure. If an output parameter of an operation is used as an input parameter of another operation, the second node may determine a dimension (and/or a type) of the input parameter. Inversely, a dimension (and/or a type) of the input parameter in the first model structure may be configured, and the second node may determine a dimension (and/or a type) of the output parameter based on the association relationship between the input parameter and the output parameter. However, this disclosure is not limited thereto. The first node may alternatively configure both a dimension (and/or a type) of the output parameter and a dimension (and/or a type) of the input parameter, and the dimensions (and/or the types) may be used by the second node to check whether the configuration is accurate. If an output parameter of an operation is configured as an input parameter of another operation, but a dimension (and/or a type) of the output parameter is different from that of the input parameter, the second node may consider that an information transmission error is caused by interference in an information transmission process. The second node may request the first node to reconfigure the first model structure, or not use the first model structure. This is not limited in this disclosure.

Optionally, the second node sends fourth information to the first node, where the fourth information includes one or more of the following capability information of the second node:

first capability information, indicating a supported integration degree of an operator;
second capability information, indicating a supported operator set; or
third capability information, indicating a supported quantization configuration.

Correspondingly, the first node receives the fourth information from the second node. The first node determines a capability of the second node based on the fourth information, and configures, for the second node, an intelligent model that meets the capability of the second node. For example, the first model structure of the intelligent model configured by using the first information meets the capability of the second node.

The fourth information may include the first capability information that indicates the integration degree that is of the operator and that is supported by the second node. For example, operators may include operators of a plurality of integration degrees, for example, operators of three integration degrees: an operator of a low integration degree (namely, a basic operator, or referred to as an operator of a third (level) integration degree), an operator of a medium integration degree (or referred to as an operator of a second (level) integration degree), and an operator of a high integration degree (or referred to as an operator of a first (level) integration degree). The basic operator may include operators such as addition, subtraction, and taking an absolute value. The operator of the medium integration degree may include operators such as one-dimensional convolution, two-dimensional convolution, and pooling. The operator of the high integration degree may include operator modules such as a residual block (residual block), a transformer block, and a mixer block (mixer block). The residual block is an operator module that includes a plurality of network layers and in which cross-layer (or skip-connection) transmission occurs between the network layers. The transformer block is an operator module that uses a self-attention (self-attention) layer to implement output of attention allocation to input content at different moments. The mixer block may also be referred to as a mixer layer, and is an operator module that sequentially extracts a feature of each dimension by performing a fully-connected calculation in each dimension. The second node notifies, by using the first capability information, the first node of the integration degree that is of the operator and that is supported by the second node, so that the first node configures, for the second node based on the first capability information, an operator that meets the integration degree supported by the second node.

For example, FIG. 5 and FIG. 6 respectively show model structures having a same function and including operators of different integration degrees. Specifically, a residual block operator shown in FIG. 5 has a same function as operators included in 601 in FIG. 6, and an integration degree of the residual block operator is higher than those of the operators included in 601, namely, two-dimensional convolution, a batch (batch) regularization function, and a linear rectification function (linear rectification function, ReLU) (or referred to as a rectified linear unit function) included in 601. For example, the integration degree of the residual block operator is a first integration degree, the two-dimensional convolution, the batch (batch) regularization function, and the ReLU function are of a second integration degree, and the first integration degree is higher than the second integration degree. The fourth information sent by the second node to the first node may include the first capability information, to notify the first node of the integration degree that is of the operator and that is supported by the second node. If the first capability information indicates that the integration degree that is of the operator and that can be supported by the second node is the first integration degree, the first node may configure the model structure shown in FIG. 5 for the second node. If the first capability information indicates that the integration degree that is of the operator and that can be supported by the second node is the second integration degree, the first node may configure the model structure shown in FIG. 6 for the second node.

The fourth information may include the second capability information indicating the operator set supported by the second node. The second node indicates, by using the second capability information, one or more operators supported by the second node. The second capability information may indicate identification information of each operator supported by the second node, and the first node may determine, based on the identification information of the operator in the second capability information, the operator set supported by the second node. Alternatively, the second capability information may indicate identification information of one or more of a plurality of predefined (or preconfigured) operator sets. The first node determines, from the plurality of predefined (or preconfigured) operator sets based on the identification information that is of the operator set and that is indicated by the second capability information, the operator set supported by the second node.

For example, the following three operator sets are predefined or preconfigured. An operator set 1 is an operator set including the basic operator, an operator set 2 is a set including the operator of the medium integration degree, and an operator set 3 is a set including the operator of the high integration degree. The second node may determine one operator set from the three operator sets based on the integration degree that is of the operator and that can be supported, and notify the first node of the operator set. If the second node supports the operator of the medium integration degree, the second node may send the second capability information to the first node, where the second capability information indicates the operator set 2.

The operator set 1 includes one or more of the following operators: addition, subtraction, taking an absolute value, element-level multiplication, element-level division, matrix multiplication, inversion, exponentiation, logarithm, variable dimension, concatenation, changing a dimension order, a trigonometric function, or the like.

The operator set 2 includes one or more of the following operators: all operators in the operator set 1, one-dimensional convolution, two-dimensional convolution, three-dimensional convolution, pooling, a nonlinear activation function, regularization, an MSE, a cross entropy, or the like.

The operator set 3 includes one or more of the following operators: all operators in the operator set 2, a residual block, a transformer block, a mixer block, an attention (attention) layer, or the like.

The fourth information sent by the second node to the first node may include the third capability information indicating the quantization configuration supported by the second node. The quantization configuration supported by the second node is notified to the first node by using the third capability information, where the quantization configuration may include one or more of a quantization mode, a quantization range, or quantization precision.

Quantization may be understood as a process of converting a floating-point number into a fixed-point number, namely, a process of converting each original parameter value used or obtained in an operation process into one of several candidate values or a process of converting an original parameter value used or obtained in an operation process into a binary bit stream.

The quantization mode includes but is not limited to one or more of uniform quantization, non-uniform quantization, scalar quantization, or vector quantization. For example, the third capability information may indicate the quantization mode supported by the second node, and the first node may configure, for the second node based on the third capability information, the quantization mode supported by the second node, to quantize a parameter. Alternatively, the third capability information may indicate a quantization mode not supported by the second node, and the first node may not select, based on the third capability information when configuring a quantization mode for the second node, the quantization mode not supported by the second node. Alternatively, the third capability information may indicate both the quantization mode supported by the second node and a quantization mode not supported by the second node. This is not limited in this disclosure.

For example, the first node may determine, based on the third capability information, that the second node does not support the vector quantization mode. In this case, a quantization mode that is of the parameter in the first model structure and that is indicated by the first node does not include the vector quantization mode. The first node may indicate another quantization mode, for example, the uniform quantization mode, and the second node may quantize the parameter in the first model structure based on the uniform quantization mode indicated by the first node.

The quantization range is for determining a correspondence between a value of an unquantized parameter and a value of a quantized parameter. For example, if a value range of an original parameter is 0 to positive infinity, the quantization mode is the uniform quantization, the quantization precision is two bits, and the quantization range is 0 to 8, an original parameter between 0 and 2 is quantized to 00, an original parameter between 2 and 4 is quantized to 01, an original parameter between 4 and 6 is quantized to 10, and an original parameter between 6 and 8 is quantized to 11. Because the quantization range is 0 to 8, all original parameters greater than 8 are quantized to 11. If the original parameter is a value (for example, 4 or 6) at a boundary of two quantization intervals, the original parameter may be quantized to a quantized value through a specific implementation. For example, it may be specified in a specific implementation that the original parameter 4 is quantized to 01 or 10, and the original parameter 6 is quantized to 10 or 11. For another example, if the quantization range is 0 to 16 in the foregoing example, an original parameter between 0 and 4 is quantized to 00, an original parameter between 4 and 8 is quantized to 01, an original parameter between 8 and 12 is quantized to 10, and an original parameter between 12 and 16 is quantized to 11. Because the quantization range is 0 to 16, all original parameters greater than 16 are quantized to 11. However, this disclosure is not limited thereto.

The quantization precision indicates a precision degree of a quantized parameter or a bit length, for example, four bits or eight bits, of the quantized parameter. For example, the second node may determine the quantization precision based on a hardware capability, for example, a bit width supported by hardware. For example, if the bit width supported by the hardware of the second node is eight bits, and the third capability information sent by the second node to the first node may indicate that the quantization precision supported by the second node is eight bits, quantization precision that is of the parameter of the first model structure and that may be configured by the first node for the second node based on the third capability information is less than or equal to eight bits.

Optionally, the first node sends third information to the second node, where the third information is for configuring a parameter quantization configuration of the first model structure. The parameter quantization configuration includes one or more of a quantization mode, a quantization range, or quantization precision. Correspondingly, the second node receives the third information from the first node, and determines the parameter quantization configuration of the first model structure based on the third information.

In an implementation, the parameter quantization configuration indicated by the third information is applicable to each parameter in the first model structure.

For example, the first information includes the model structure information and the third information, and the model structure information is for configuring the first model structure. Optionally, the model structure information further includes the input parameter information of the first model structure and/or the output parameter information of the first model structure. The third information indicates the parameter quantization configuration, and the parameter quantization configuration is applicable to each parameter in the first model structure. The parameter quantization configuration includes one or more of quantization mode information indicating the quantization mode, quantization range information indicating the quantization range, and quantization precision information. For example, the first information may be represented as follows:

```
First information: {
  model structure information: {
    input parameter information of the first model structure,
    operation information 1, ..., operation information N,
```

```
output parameter information of the first model structure, ...}
third information: {quantization mode information, quantization range information,
quantization precision information, ...}...}
```

In another implementation, the third information may indicate a quantization configuration of one or more parameters in the first model structure.

In an example, operation information may include third information, and the third information specifically indicates parameter quantization configurations of a model parameter and an output parameter of the operation information. For example, operation information n may be represented as follows:

Operation information n: {operator information, operation parameter information, output parameter information, third information: {parameter quantization configuration} }

In another example, operation parameter information in operation information may include third information, and the third information specifically indicates a quantization configuration of an operation parameter. For example, operation information n may be represented as follows:

Operation information n: {operator information, operation parameter information: { operation parameter k, third information: {parameter quantization configuration}, ...}, ...}

Optionally, the operation parameter information may include one piece of third information, and a parameter quantization configuration indicated by the third information is applicable to each operation parameter of an operation. Alternatively, each of one or more operation parameters indicated by the operation parameter information corresponds to one piece of third information, and the third information indicates a quantization configuration of an operation parameter corresponding to the third information. Parameter quantization configurations of different operation parameters may be different or may be the same.

In another example, output parameter information in operation information may include third information, and the third information specifically indicates a quantization configuration of an output parameter. A specific implementation is similar to the implementation in which the operation parameter information includes the third information, and reference may be made to the foregoing example implementation. For brevity, details are not described herein again. It should be understood that the foregoing examples may be implemented in combination. For example, the operation parameter information in the operation information n includes the third information indicating the quantization configuration of the operation parameter, and the output parameter information in the operation information n also includes the third information indicating the quantization configuration of the output parameter. This is not limited in this disclosure.

In another implementation, the first node sends, to the second node, the second information indicating the candidate set of the parameter value of the model parameter, where the second information includes third information. The third information indicates a quantization configuration of the model parameter in the first model structure.

For example, the second information may include one piece of third information, and a parameter quantization configuration indicated by the third information is applicable to each candidate value in the candidate set. Alternatively, one or more candidate values in the candidate set correspond to one piece of third information, and a parameter quantization configuration indicated by the third information is applicable to the candidate value corresponding to the third information. Parameter quantization configurations for different candidate values may be different or may be the same.

Optionally, in the foregoing example, when the third information indicates the parameter quantization configuration of the model parameter, it may be understood that the first node quantizes the parameter value of the model parameter by using the parameter quantization configuration, and the second node may perform, based on the third information, quantization decoding on a bit sequence corresponding to a parameter value of a quantized model parameter, to obtain the parameter value of the model parameter through the decoding.

As described above, the first node may configure, by using the first information, the operator and the operation parameter that are included in each operation in the first model structure, and configure the first model structure by using the connection relationship between the operations. This disclosure further provides an optional manner of configuring the first model structure. To be specific, when the first model structure includes one or more model structures that have been configured by the first node for the second node, the first node may configure the first model structure by quoting the configured model structure. This can improve efficiency of configuring the model structure, and reduce information overheads.

The following describes several optional implementations in which the first node configures the first model structure by quoting the configured model structure by using the first information. It should be understood that this disclosure is not limited thereto.

Implementation 1: The first node may configure the first model structure by quoting, by using the first information, one model structure that has been configured for the second node.

For example, the first node may configure the first model structure based on a fifth model structure, and the N operations in the first model structure include an operation in the fifth model structure.

For example, the first node sends the first information to the second node. The first model structure configured by using the first information includes the fifth model structure that has been configured by the first node for the second node. In other words, a part of operations in the first model structure are the same as the operation in the fifth model structure. In this case, the first information may indicate, by indicating identification information of the fifth model structure, that the first model structure includes the configured fifth model structure. The first information may be represented as follows:

```
First information: {
   model structure information 1: {
      identification information of the model structure: {first model structure}
      ...,
      operation information 1,
      operation information 2: {operator information, operation parameter information,
      output parameter information: {output parameter x} }
   model structure information 2: {
      identification information of the model structure: {fifth model structure},
      input parameter information of the fifth model structure: {output parameter x}
      ...},
      operation information 3: {operator information, operation parameter information:
  { output parameter y, ...}, output parameter information: {output parameter z} },
      output parameter information of
the first model structure: {output parameter z}, ...}
         ...}
```

After receiving the first information, the second node determines, based on that the identification information of the model structure in the model structure information 1 indicates the first model structure, that the first information is for configuring the first model structure. The model structure information 1 further includes the model structure information 2. The model structure information 2 indicates the fifth model structure that has been configured by the first node for the second node, and indicates that the first model structure includes the operation in the fifth model structure. Model structure input information in the model structure information 2 indicates that the output parameter x is used as an input parameter of the fifth model structure. In this case, the second node may determine that the fifth model structure is connected after an operation 2 (namely, an operation configured by using the operation information 2) in the first model structure. The model structure information 2 only indicates that the input parameter of the fifth model structure is updated, and does not indicate other information of the fifth model structure. In this case, the second node may consider that another configuration of the fifth model structure remains unchanged. For example, an output parameter that is of the fifth model structure and that is configured by the first node for the second node before the first node sends the first information is the output parameter y, and the second node may learn, based on the first information, that the output parameter of the fifth model structure is not updated in the first information, so that the second node may determine that the output parameter of the fifth model structure is still the output parameter y. In addition, the operation information 3 indicates that an operation parameter of an operation includes the output parameter y of the fifth model structure. This indicates that an operation 3 configured by using the operation information 3 is further connected after the operation in the fifth model structure included in the first model structure. In addition, the output parameter information of the first model structure indicates that the output parameter z of the operation 3 is used as the output parameter of the first model structure.

Alternatively, the first information may indicate, by using connection relationship information, the connection relationship between the operations and a connection relationship between an operation and the fifth model structure. The first information may be represented as follows:

```
First information: {
   model structure information 1: {
      identification information of the model structure: {first model structure}
      ...,
      operation information 1,
```

operation information 2: {operator information, operation parameter information, output parameter information: {output parameter x1}} model structure information 2: { identification information of the model structure: {fifth model structure},}, operation information 3: {operator information, operation parameter information: {input parameter y1, ...}, output parameter information: {output parameter x2}}, output parameter information of the first model structure: {output parameter x3}, ...} connection relationship information: {..., input parameter y0=output parameter x1, input parameter y1=output parameter x0, output parameter x3=output parameter x2, }, ...}

For example, identification information of the input parameter that is of the fifth model structure and that is configured by the first node for the second node before the first node sends the first information is the input parameter y0, and identification information of the output parameter is the output parameter x0. As described above, the first information includes connection relationship information, and the connection relationship information indicates that the input parameter y0=the output parameter x1. This indicates that the output parameter x1 is used as the input parameter of the fifth model structure, and the output parameter x0 of the fifth model structure is used as an input parameter of an operation 3.

The output parameter x2 of the operation 3 is used as the output parameter of the first model structure, in other words, the output parameter x3=the output parameter x2.

Implementation 2: The first node may configure the first model structure by quoting, by using the first information, a plurality of model structures that have been configured for the second node.

For example, the first node sends the first information to the second node, where the first information is for configuring the first model structure, and is for configuring the first model structure for the second node by quoting a second model structure and a third model structure that have been configured for the second node. In other words, the first model structure includes the N operations included in the second model structure and the third model structure. The first information may be represented as follows:

```
First information: {
   model structure information 1: {
      identification information of the model structure: {first model structure}
      input parameter information of the first model structure: {input parameter x}
      ...,
      model structure information 2: {
         identification information of the model structure: {second model structure},
         input parameter information of the second model structure: { input parameter
x}
      ...},
      model structure information 3: {
         identification information of the model structure: {third model structure},
         input parameter information of the third model structure: {output parameter y}
      ...},
      output parameter information of
the first model structure: {output parameter z}, ...}
         ...}
```

The first information includes the model structure information 1, the identification information of the model structure in the model structure information 1 indicates the first model structure, and the second node may determine that the first information is for configuring the first model structure. In addition, the model structure information 1 further includes the model structure information 2 and the model structure information 3 that respectively indicate the second model structure and the third model structure. This indicates that the first model structure includes the second model structure and the third model structure. The model structure information 2 and the model structure information 3 further respectively indicate that an input parameter of the second model structure is the input parameter x of the first model structure (the input parameter information of the first model structure indicates that the input parameter of the first model structure is the input parameter x) and an input parameter of the third model structure is the output parameter y. The output parameter y is an output parameter that is of the second model structure and that is configured by the first node when the first node configures the second model structure for the second node. The second node may determine, based on that the input parameter information of the third model structure indicates the output parameter y, that the third model structure is connected after the second model structure. In addition, an output parameter that is of the third model structure and that is configured by the first node when the first node configures the third model structure for the second node is the output parameter z. The second node may determine, based on that the output parameter information of the first model structure indicates the output parameter z, that the output parameter of the first model structure is the output parameter z of the third model structure.

Implementation 3: The first node may configure the first model structure by quoting, for a plurality of times by using the first information, one model structure that has been configured for the second node.

If the first model structure includes one type of operation connection structure, the operation connection structure repeatedly appears in the first model structure for a plurality of times. For example, the first model structure includes a cyclic operation or an iterative operation. The first node may first configure the operation connection structure as a model structure (for example, a sixth model structure) for the second node by using one piece of configuration information, and then quote identification information of the sixth model structure for a plurality of times by using the first information, to indicate that the first model structure includes a plurality of sixth model structures. Alternatively, when configuring the first model structure, the first node determines that the first model structure includes a sixth model structure that has been configured for the second node, and the sixth model structure appears in the first model structure for a plurality of times. In this case, the first node may quote identification information of the sixth model structure for a plurality of times by using the first information, to configure the first model structure.

For example, the first node configures the sixth model structure for the second node before sending the first information. The first information may be represented as follows:

```
First information: {
   model structure information 1: {
```

```
          identification information of the model structure: {first model structure}
          ...,
          input parameter information of the first model structure: {input parameter x1}
          model structure information 2: {
             identification information of the model structure: {sixth model structure},
             input parameter information of the sixth model structure: {input parameter x1}
             output parameter information of the sixth model structure: {output parameter
             y1}}
          model structure information 3: {
             identification information of the model structure: {sixth model structure},
             input parameter information of the sixth model structure: {output parameter
     y1}
             output parameter information of the sixth model structure: {output parameter
             y2}}
          output parameter information of the first model structure: {output parameter
     y2}, ...}
          ...}
```

The model structure information 1 in the first information includes the model structure information 2 and the model structure information 3, and the identification information of the sixth model structure is quoted once in each of the two pieces of model structure information. The second node may determine, based on the first information, that the first model structure includes two sixth model structures. In this way, when a same operation connection structure appears repeatedly, it is unnecessary to perform repeated configuration in detail one by one, and overheads can be reduced by quoting.

Implementation 4: The first node may configure the first model structure by quoting, for a plurality of times in the first information, one model structure configured in the first information.

If the first node has not configured, for the second node before sending the first information, a sixth model structure that is repeated for a plurality of times in the first model structure, the first node may configure the sixth model structure in the first information. When the sixth model structure appears again in the first model structure, the sixth model structure is indicated by quoting. There is no need to configure the model structure for a plurality of times. A difference of this example from the foregoing example lies in that a model structure configured in configuration information instead of a model structure that has been configured for the second node before the first information is sent may be quoted in the configuration information of a model structure. The first information may be represented as follows:

```
          First information: {
             model structure information 1: {
                identification information of the model structure: {first model structure}
                ...,
                input parameter information of the first model structure: {input parameter x1}
                model structure information 2: {
                   identification information of the model structure: {sixth model structure},
                   input parameter information of the sixth model structure: {input parameter x1}
                   operation information k: {operator information, operation parameter
                   information, output parameter information}
                   operation information k+1: {operator information, operation parameter
                   information, output parameter information}
                   output parameter information of the sixth model structure: {output parameter
                   y1}}
                model structure information 3: {
                   identification information of the model structure: {sixth model structure},
                   input parameter information of the sixth model structure: {output parameter
     y1}
                   output parameter information of the sixth model structure: {output parameter
                   y2}}
                output parameter information of the first model structure: {output parameter
     y2}, ...}
                ...}
```

The first model structure is configured by using the model structure information 1 in the foregoing first information, and the sixth model structure included in the first model structure is configured by using the model structure information 2 included in the model structure information 1. Specifically, an input parameter and an output parameter of the sixth model structure, and an operation k and an operation k+1 in the sixth model structure are configured. One sixth model structure is further connected after the sixth model structure. In this case, the model structure information 1 further includes the model structure information 3, and the model structure information 3 indicates identification information of the sixth model structure to quote a configuration of the sixth model structure. In addition, the input parameter information and the output parameter information respectively indicate that the input parameter and the output parameter of the sixth model structure are updated, and the second node considers that other information that is of the sixth model structure and that is not indicated by the model structure information 3 is not updated, and still uses a configuration in the model structure information 2. In this manner, information overheads caused when one type of operation connection structure appears for a plurality of times in the model structure can be reduced.

The foregoing uses examples to describe the optional implementations in which the first node configures the first model structure by using the first information. Specifically, the first node may initially configure the first model structure by using the first information, or may reconfigure the first model structure by using the first information.

In an implementation, the first information is for initially configuring the first model structure.

Before sending the first information to the second node, the first node has not configured the first model structure for the second node. After the second node receives the first information, based on the identification information of the first model structure in the first information and that the first model structure has not been configured on the second node, it may be considered that the first information is for initially configuring the first model structure.

In another implementation, the first information is for updating the first model structure. In other words, the first information is for reconfiguring the first model structure.

Before the first node sends the first information to the second node, the first model structure has been configured on the second node, and the first node may update the first model structure by using the first information. After the second node receives the first information, based on the identification information of the first model structure in the first information and that the first model structure has been configured on the second node, it may be considered that the first information is for reconfiguring the first model structure.

The first node may update (or reconfigure) the first model structure in the foregoing configuration manner. The first node may indicate an updated configuration of the first model structure by using one or more of the operation information, the model structure information, the input parameter information, or the output parameter information included in the first information. The second node may consider that a configuration that is of the first model structure and that is not updated in the first information remains unchanged.

Optionally, the first information is for configuring to add the N operations to the first model structure.

The first node may add the N operations after an operation of the first model structure by using the first information.

For example, before the first node sends the first information to the second node, the first model structure includes a third operation, and the first information may be specifically for configuring to add the N operations after the third operation. If an input parameter of the third operation includes an output parameter k, the first information may be represented as follows:

```
        First information: {
          model structure information: {
            identification information of the model structure: {first model structure},
            operation information 1: {operator information, operation parameter information
{ output parameter k, ...}, output parameter information, ...}, ...,
            operation information N: { operator information, operation parameter information,
            output parameter information: {output parameter k+q}, ...}, ...}
          ...}
```

After receiving the foregoing first information, the second node may determine, based on that the identification information of the model structure in the model structure information indicates the first model structure, that the first information is for updating the first model structure, where the first information includes operation information corresponding to the N operations added to the first model structure. The operation parameter information in the operation information 1 corresponding to an operation 1 indicates that an input parameter of the operation includes the output parameter k of the third operation, in other words, it indicates that the N operations are added after the third operation of the first model structure by using the first information.

In an example, the first node may add the N operations after a last operation of the first model structure by using the first information.

For example, before the first node updates the first model structure, if the third operation is the last operation of the first model structure, in other words, an output parameter that is of the first model structure and that is not updated is the output parameter of the third operation, the second node may determine that the first node adds the N operations after the last operation by using the first information, and the second node may consider that the output parameter of the first model structure is updated to an output parameter of the last operation in the N operations, namely, the output parameter k+q of the operation N. Alternatively, the first information further includes output parameter information of the first model structure, where the output parameter information indicates that the output parameter of the first model structure is updated to the output parameter k+q. In addition, the second node may consider that other information that is of the first model structure and that is not updated in the first information remains unchanged.

In another example, the first node may add the N operations after an operation of the first model structure and before another operation by using the first information, in other words, add the N operations between two operations of the first model structure.

For example, each piece of operation information in the first information may include identification information of a corresponding operation. If a fourth operation is after the third operation of the first model structure before the first node updates the first model structure, the first information may further include operation information N+1, where the operation information N+1 is operation information corresponding to the fourth operation. For example, the first information may be represented as follows:

```
First information: {
  model structure information: {
    identification information of the model structure: {first model structure},
    operation information 1, ...,
    operation information N: f identification information of the operation n, operator
    information, operation parameter
information, output parameter information: {output parameter
    k+q}, ...}
    operation information N+1: f identification information of the fourth operation,
    operation parameter information: {output parameter k+q, ...} }, ...}
  ...}
```

The operation information N+1 includes the identification information of the fourth operation, and the operation parameter information in the operation information N+1 is for updating an operation parameter of the fourth operation, for example, specifically indicates that an input parameter of the fourth operation includes the output parameter k+q. This indicates that the N operations are added before the fourth operation in the first model structure by using the first information. If the operation information N+1 does not include other information, it indicates that the other information of the fourth operation is not updated.

Alternatively, the first information may include connection relationship information indicating the association relationship between the input parameter and the output parameter of the N operations and further indicating a relationship between an input parameter and an output parameter of the N operations and an original operation of the first model structure. For example, the connection relationship information may indicate that an input parameter of an operation 1 in the N operations is an output parameter k of the first model structure. In addition, the connection relationship information may further indicate that an output parameter of an operation N in the N operations is the output parameter of the first model structure, or the connection relationship may further indicate that an output parameter of an operation N in the N operations is an output parameter of the fourth operation in the first model structure.

The first node may add the N operations before the 1st operation of the first model structure by using the first information.

The first information may further indicate to add the N operations before the 1st operation (for example, a fifth operation) of the first model structure. In this case, the first information may indicate that an input parameter of one of the N operations includes the input parameter of the first model structure, and an input parameter of the fifth operation is updated to include an output parameter of a last operation in the N operations. An updated connection relationship may be indicated by operation parameter information of the operation, or may be indicated by connection relationship information. For a specific implementation, refer to the foregoing example. For brevity, details are not described herein again.

The foregoing uses examples to describe the reconfiguration manner that is for the first model structure and in which the first node adds the N operations in the first model structure by using the first information. The first node may add, in the first model structure, a model structure that has been configured for the second node, to update the first model structure.

For example, the first node may add, in the first model structure, a second model structure that has been configured for the second node, to update the first model structure. In other words, the first node may add an operation in the first model structure by adding the model structure in the first model structure. The first information may be represented as follows:

```
First information: {
  model structure information 1: {
    identification information of the model structure: {first model structure},
    model structure information 2: {
      identification information of the model structure: {second model structure},
      input parameter information of the second model structure: {output parameter
      k},
      output parameter information of the second model structure: { output parameter
      k+q},}
    output parameter information of the first model structure: {output parameter
    k+q}, ...}
  ...}
```

The first information includes the model structure information 1, the identification information of the model structure in the model structure information 1 indicates the first model structure, and the second node may determine that the first information is for updating the first model structure. The model structure information 1 further includes the model structure information 2 of the second model structure, and the identification information in the model structure information 2 indicates the second model structure. This indicates that the second model structure is added in the first model structure. In addition, the second node determines, based on that the input parameter information of the second model structure in the model structure information 2 indicates the output parameter k of a third operation in the first model structure, that the second model structure is connected after the third operation of the first model structure. The first information further indicates that the output parameter of the first model structure is the output parameter k+q of the second model structure. The second node may determine to update the output parameter of the first model structure to the output parameter k+q. It should be understood that if the first model structure is a model structure that has been configured by the first node for the second node, the second node may determine that the first node updates (in other words, reconfigures) the first model structure by using the first information. If the first model structure has not been configured on the second node before the second node receives the first information, the second node may determine that the first node initially configures the first model structure by using the first information. Optionally, the first information may further include operation information for configuring an updated operation in the first model structure. For a specific implementation, refer to the foregoing descriptions. For brevity, details are not described again.

The foregoing describes the implementation in which the first model structure is reconfigured by using the first information by adding the operation or the model structure in the first model structure. However, this disclosure is not limited thereto. The first information may be for updating one or more of the operator, the input parameter, the model parameter, the connection relationship, or the quantization configuration of the operation.

For example, the first model structure includes an operation n, and the first information may be for updating an operator of the operation n. For example, the first information includes operation information n corresponding to the operation n, and the operation information n indicates an updated operator of the operation n.

For another example, the first information may be for updating an input parameter of the operation n. For example, the input parameter that is of the operation n and that is not updated includes an output parameter of an operation n-1, and the first information may indicate an updated input parameter of the operation n. For example, the updated input parameter that is of the operation n and that is indicated by the first information includes an output parameter of an operation n-2, but does not include the output parameter of the operation n-1. The first node may update the input parameter of the operation n by using operation parameter information in operation information corresponding to an operation parameter n, or may update the input parameter of the operation n based on the connection relationship information in the first information. Optionally, in a first model structure updated by using the first information, if the output parameter of the operation n-1 is not for another operation or is not used as an output parameter of the model structure, the second node may consider that the first node deletes the operation n-1 from the first model structure by updating a connection relationship.

For another example, the first information may update a model parameter of the operation n, operation information n corresponding to the operation n in the first information indicates identification information of an updated model parameter of the operation n, and the second node may determine a parameter value of the updated model parameter based on the identification information of the updated model parameter and a candidate set. Alternatively, the operation information n may indicate a parameter value of an updated model parameter of the operation n.

For another example, the first information may be for updating a parameter value of one or more model parameters of the first model structure. When parameter values of all model parameters of the first model structure need to be updated, an update manner in which the first information includes operation information of each operation and the parameter value of the model parameter of each operation is independently updated by using the operation information may not be used, but updated parameter values of all the model parameters of the first model structure may be indicated in the first information. The parameter values are sequentially sorted based on a sorting order (which may be an order that is based on the connection relationship or a sorting order used when the first model structure is configured) of the operations in the first model structure and a sorting order of the model parameters in each operation. For example,

```
First information: {
   model structure information: {
      identification information of the model structure: {first model structure},
      model parameter information of the model structure: {parameter value 1,
      parameter value 2, ..., parameter value Q}}
   ...}
```

As described above, the second node determines, based on that the identification information of the model structure in the first information indicates the first model structure and the first model structure has been configured on the second node, that the first node updates the first model structure by using the first information. In addition, the model structure information includes the model parameter information of the model structure, and the model parameter information indicates Q parameter values. In this case, the second node may determine that the Q parameter values sequentially correspond to all Q model parameters of the first model structure. If the 1st operation (for example, an operation 1) of the first model structure includes one model parameter, a parameter value of the model parameter of the operation 1 is updated to the parameter value 1. If the 2nd operation includes two model parameters, parameter values of the two model parameters are sequentially updated to the parameter value 2 and the parameter value 3. By analogy, updated parameter values of all the model parameters of the first model structure are determined.

Optionally, the first node may update the parameter value of the model parameter in the candidate set to update the parameter value of the model parameter of the first model structure. For example, the second information sent by the first node to the second node indicates the candidate set of the parameter value of the model parameter to the second node, and the second node determines the model parameter of the first model structure based on the candidate set. For example, the second information indicates the candidate value in the candidate set and the identification information of each candidate value. Identification information of one of the candidate values is the same as identification information of one model parameter in the first model structure, and the second node may determine that a parameter value of the model parameter identified by the identification information is the candidate value identified by the identification information in the candidate set. The first node may send sixth information to the second node, where the sixth information is for updating the parameter value of the model parameter of the first model structure by updating the candidate value in the candidate set. For example, the sixth information may include the identification information of the candidate value in the candidate set and an updated candidate value corresponding to the identification information of the candidate value. For example, the sixth information may be represented as follows:

Sixth information: {
candidate value information 1: {identification information A, X},
candidate value information 2: {identification information B, Y}, ...}

Before the sixth information is received, the identification information A in the candidate set identifies a candidate value W. Based on a correspondence between a model parameter and identification information of a candidate value (refer to the foregoing descriptions, and details are not described herein again), the candidate value W is a parameter value of a model parameter A in the first model structure. After receiving the sixth information, the second node may determine, based on the identification information A in the candidate value information 1, that the candidate value identified by the identification information A is updated to X. Therefore, the second node may determine, based on the correspondence of the identification information, that the parameter value of the model parameter A corresponding to the identification information A is updated to X. Similarly, the sixth information indicates, by using the candidate value information 2, that a candidate value identified by the identification information B is updated to Y In this case, the second node may determine that a parameter value of a model parameter that is in the first model structure and that corresponds to the identification information B is updated to Y

For another example, the first information may be further for updating an attribute of an operator of the operation n. For example, operation information n corresponding to the operation n in the first information includes attribute information, and the attribute information indicates an updated attribute of the operation n. For example, the operator of the operation n is convolution, and the attribute information may indicate an updated convolution stride (stride) of the convolution operator, or the attribute information indicates identification information of one of a plurality of predefined or preconfigured attribute sets, to indicate that an attribute of the convolution operator is updated to an attribute in the attribute set corresponding to the identification information.

In the foregoing example, if the operation information n does not indicate other information of the operation n, the second node may consider that the other information of the operation n remains unchanged.

Optionally, the first node may implicitly indicate, by reconfiguring the first model structure by using the first information, to delete one or more model structures and/or one or more operations included in the first model structure.

For example, before sending the first information, the first node configures the first model structure for the second node. The first model structure includes M+N operations that are sequentially connected. The first node may reconfigure, by using the first information, that the first model structure includes N operations in the M+N operations. In other words, the first node may implicitly indicate, by using the first information, to delete M operations in the first model structure. The first information may be represented as follows:

First information: {

    model structure information 1: {

        identification information of the model structure: {first model structure},

        operation information 1: {identification information of an operation 1},

        operation information M+2: {identification information of an operation M+1,

operation parameter information: {**output parameter A**}},

        operation information M+3: {identification information of an operation M+2},

operation information M+4: {identification information of an operation M+3}, ..., operation

information N+M: {identification information of the operation n}}

        ...}

After receiving the first information shown above, the second node may determine, based on that the identification information of the model structure in the model structure information 1 indicates the first model structure, that the first information is for reconfiguring the first model structure. The first information includes operation information corresponding to each operation in an updated first model structure, where other information that is not updated in the first information remains unchanged. The operation information M+2 includes the identification information of the operation M+1, and the operation parameter information indicates that an input parameter of the operation M+2 is updated to the output parameter A of the operation 1. After receiving the first information, the second node determines, based on that the model structure information does not include operation information corresponding to an operation 2 to the operation M+1 (M operations in total), the input parameter of the operation M+2 is updated to the output parameter A of the operation 1, and output parameters of the operation 2 to the operation M+1 are not used in the N operations reserved in the first model structure configured by using the first information, that the first node deletes the operation 2 to the operation M+1 from the first model structure.

Alternatively, the first node may implicitly indicate, only by updating the connection relationship between the operations, to delete M operations in M+N operations. The first information may be represented as follows:

First information: {

    model structure information 1: {

        identification information of the model structure: {first model structure},

        operation information M+2: {identification information of an operation M+2,

operation parameter information: {**output parameter A**}},}

        ...}

After receiving the first information shown above, the second node determines, by using the operation information M+2, that an input parameter of the operation M+2 is updated from an originally configured output parameter B of an operation M+1 to the output parameter A of an operation 1. In an original configuration of the first model structure, neither the operation 1 nor the operation M+2 to an operation N+M uses output parameters of an operation 2 to the operation M+1, and the second node may determine that the first node deletes the operation 2 to the operation M+1 from the first model structure.

The foregoing describes the implementation in which the first node deletes a plurality of consecutive operations in the first model structure by using the first information. It should be understood that this disclosure is not limited thereto. Alternatively, the first node may delete one operation and a plurality of inconsecutive operations in the model structure by using an indication. For a specific implementation, refer to the foregoing examples. For brevity, details are not described again.

For another example, the first node configures a first model structure for the second node before sending the first information, where the first model structure includes a second model structure, a third model structure, and a fourth model structure that are sequentially connected, an input parameter of the fourth model structure is an output parameter q of the third model structure, and an output parameter m of the fourth model structure is an output parameter of the first model structure. The first node may reconfigure the first model structure by using the first information, and implicitly indicate, by using the first information, that the fourth model structure in the first model structure is deleted. The first information may be represented as follows:

```
          First information: {
             model structure information 1: {
                identification information of the model structure: {first model structure},
                output parameter information of the
first model structure: {output parameter q}, ...}
             ...}
```

After receiving the first information shown above, the second node may determine, based on that the identification information of the model structure included in the model structure information 1 indicates the first model structure, that the first information is for reconfiguring the first model structure. The model structure information 1 further includes the output parameter information of the first model structure, and the output parameter information indicates that the output parameter of the first model structure is updated to the output parameter q of the third model structure. After the second node receives the first information, because an original configuration, namely, the output parameter of the fourth model structure, of the first model structure is not used by another operation or model structure, the second node may determine that the fourth model structure in the first model structure is deleted.

Optionally, when first indication information in the first information indicates that the first information is reconfiguration information, the first indication information may specifically indicate that the first information is for adding, updating, or deleting a model structure, or is for adding, updating, or deleting an operation.

As described above, the first node adds the N operations in the first model structure by using the first information. The first information may include the first indication information, and the first indication information indicates that an update manner (or purpose) is addition, or indicates to add an operation. Alternatively, the first node adds a model structure in the first model structure by using the first information. The first information may include the first indication information, and the first indication information indicates that an update manner (or purpose) is addition, or indicates to add a model structure. Specifically, the first indication information may be shown in the first information shown in the corresponding example. For brevity, details are not described herein.

The first information may be for deleting an operation or a model structure in the first model structure.

In an example, the first model structure includes M operations, M is a positive integer, and that the first information is for configuring a first model structure of an intelligent model includes: The first information indicates to delete the M operations from the first model structure.

For example, the first information may be represented as follows:

```
          First information: {
             first indication information:
{purpose: f deletion}, identification information of the
             first model structure: f identification information of the M operations}, ...}
             ...}
```

The first information includes the first indication information, the first indication information indicates that the purpose of the first information is the deletion, and the first indication information further includes the identification information of the first model structure and the identification information of the M operations in the first model structure. In this case, it indicates that the first indication information is specifically for deleting the M operations in the first model structure.

If the first information further indicates to add or update N operations in the first model structure, the first information may further include another piece of first indication information indicating that the purpose of the first information further includes addition or update. The first information may be represented as follows:

```
          First information: {
             first indication information A: {purpose:
f deletion}, identification information of the
             first model structure: f identification information of the M operations}, ...}
             first indication information B: {purpose: {addition (or update)} },
                model structure information: {
                   identification information of the first model structure,
```

```
      operation information 1, ..., operation information N, ...}}
```

In this example, after receiving the first information, the second node may determine, based on the first indication information A, that the first node indicates to delete the M operations in the first model structure, and determine, based on the first indication information B, that the first node adds (or updates) the N operations in the first model structure. For example, the first node may update a connection relationship between other operations that is obtained through deletion of the M operations. However, this disclosure is not limited thereto.

In another example, the first model structure includes a second model structure, and that the first information is for configuring a first model structure of an intelligent model includes: The first information indicates to delete the second model structure from the first model structure.

For example, the first information may be represented as follows:

```
      First information: {
         first indication information: {
         purpose: {deletion},
         identification information of the first
 model structure: f identification information of
         the second model structure}, ...}
      ...}
```

The first information includes the first indication information, the first indication information indicates that the purpose of the first information is the deletion, and the first indication information further includes the identification information of the first model structure. Identification information of the second model structure is included in next-level information of the identification information of the first model structure. In this case, it indicates that the first indication information is specifically for deleting the second model structure in the first model structure.

In S401, the first node configures (initially configures or reconfigures) the first model structure by using the first information, where the first model structure is for configuring the intelligent model. The first node may configure the intelligent model based on the first model structure. The second node may determine, in S402 based on the first model structure configured by using the first information, the intelligent model including the first model structure.

S402: The second node determines the intelligent model based on the first information.

After receiving the first information, the second node determines the first model structure based on the first information.

For example, the first information includes the model structure information of the first model structure, the model structure information includes the operation information corresponding to the N operations of the first model structure, and the second node may determine, based on the operation information corresponding to the N operations, the N operations included in the first model structure. The first node may indicate the parameter value of the model parameter of the operation by using the operation parameter information in the operation information. Optionally, the operation parameter information in the first information may indicate the identification information of the model parameter of the operation, the first node further sends the second information to the second node, and the second node determines, based on the identification information of the model parameter and the second information, that the parameter value of the model parameter in the first model structure is a candidate value in the candidate set configured by using the second information.

The first information further indicates the connection relationship between the N operations (for example, the connection relationship is indicated in a manner in which an input parameter indicated by one piece of operation information includes an output parameter of another operation; or the first information includes the foregoing connection relationship information, and the connection relationship information indicates the connection relationship, and this disclosure is not limited thereto). The second node may determine the connection relationship between the N operations in the first model structure based on the first information. Optionally, the first node further sends the foregoing third information to the second node, and the second node may determine the quantization configuration of the parameter in the first model structure based on the third information. The second node determines the value of the parameter in the first model structure based on the quantization configuration, or dequantizes the bit sequence that is of the value of the quantized model parameter and that is indicated in the first information, to obtain the parameter value of the model parameter. However, this disclosure is not limited thereto. The first node may not send the third information to the second node, and the first node and the second node may quantize or dequantize the parameter of the first model structure by using a predefined parameter quantization configuration.

For another example, the first information may configure the first model structure by quoting a model structure. The second node determines the first model structure based on the first information, where the first model structure includes another model structure.

The first node configures (initially configures or reconfigures) the first model structure for the second node by using the first information.

Optionally, the first model structure is a partial structure of the intelligent model. Alternatively, the first model structure is a complete structure of the intelligent model, and the intelligent model is determined once the second node determines the first model structure. In an implementation (denoted as an implementation A), after the first node configures the first model structure by using the first information, the first node configures an intelligent model for the second node by quoting the first model structure in model configuration information of the intelligent model. After determining the first model structure based on the first information, the second node determines, based on the configuration information of the intelligent model, the intelligent model including the first model structure. In another implementation (denoted as an implementation B), the first node configures (initially configures or reconfigures) an intelligent model for the second node by using the first information, and the intelligent model includes the first model structure. The second node determines, based on the first information, the intelligent model including the first model structure. This is not limited in this disclosure. The intelligent model is used by the second node to perform model training or infer target information.

The following specifically describes the foregoing implementation A and implementation B.

In the implementation A, after the first node configures the first model structure by using the first information, the first node configures the intelligent model for the second node by quoting the first model structure in the model configuration information of the intelligent model.

For example, the first node configures the first model structure for the second node by using the first information, and further configures a second model structure and a third model structure for the second node. The first node may send configuration information of a first intelligent model to the second node, where the configuration information is for configuring a model structure included in the first intelligent model. The second node may determine the first intelligent model based on the configuration information of the first intelligent model. The configuration information of the first intelligent model may be represented as follows:

Configuration information of the intelligent model: {

    identification information of the intelligent model: {first intelligent model}

    input parameter information of the first intelligent model: {input parameter m},

    identification information of the model structure: {first model structure, second model structure, third model structure}, ...,

    output parameter information of the first intelligent model: {output parameter n},

    connection relationship information, ...}

The foregoing configuration information of the first intelligent model indicates, by using the identification information of the model structure, that the first intelligent model includes the first model structure, the second model structure, and the third model structure that have been configured for the second node. The configuration information further includes the connection relationship information indicating a connection relationship between the model structures. For example, corresponding identification information of an input parameter and an output parameter is configured for each model structure by using the model structure information previously sent by the first node to the second node. For example, the input parameter of the first model structure is an input parameter k, and the output parameter is an output parameter q; an input parameter of the second model structure is an input parameter k+1, and an output parameter is an output parameter q+1; and input parameters of the third model structure include an input parameter k+2 and an input parameter k+3, and an output parameter is an output parameter q+2. The connection relationship information may indicate the connection relationship between the model structures by indicating a relationship between the identification information of the parameters. For example, the connection relationship information may be represented as follows:

```
Connection relationship information: {
     input parameter k=input parameter m, input parameter k+1=output parameter q,
 input parameter k+2=output parameter q+1, input parameter k+3=output parameter q, output
 parameter n=output parameter q+2}
```

The second node may determine, based on the connection relationship information, that the input parameter m of the first intelligent model is used as the input parameter of the first model structure, the output parameter q of the first model structure is used as the input parameter of the second model structure, the input parameters of the third model structure include the output parameter q of the first model structure and the output parameter q+1 of the second model structure, and an output parameter of the first intelligent model is the output parameter n of the third model structure. However, this disclosure is not limited thereto. The first node may alternatively configure the connection relationship between the model structures by reconfiguring the input parameters and the output parameters of the three model structures by using the configuration information of the intelligent model.

Optionally, if the model structure information of the model structure in the first intelligent model does not indicate a parameter value of the model structure, the configuration information of the first intelligent model may further include information indicating a candidate set of the parameter value. Alternatively, the first node further sends configuration information of one or more candidate sets to the second node in addition to the configuration information of the first intelligent model, to notify the second node of the parameter value of the parameter in the first intelligent model. It should be understood that parameter values of different parameters in the first intelligent model may be candidate values in a same candidate set, or may be candidate values in different candidate sets.

In the implementation B, the first node configures (initially configures or reconfigures) the intelligent model for the second node by using the first information, and the intelligent model includes the first model structure.

Optionally, the first information is specifically for initially configuring the intelligent model, and it is specifically configured by using the first information that the intelligent model includes the first model structure. For example, the first information may be specifically represented as follows:

```
First information: {
    identification information of the intelligent model: {intelligent model 1},
    input parameter information of the intelligent model,
    model structure information: {
        identification information of the model structure: {first model structure}
        input parameter information of the first model structure,
        operation information 1, ..., operation information N,
        output parameter information of the first model structure, ...}
    output parameter information of the intelligent model, ...}
```

The first information includes the identification information of the intelligent model, where the identification information indicates that the first information is for configuring the intelligent model 1. The second node may determine, based on that the intelligent model 1 is not configured before the first information is received, that the first information is for initially configuring the intelligent model 1. The first information further includes the input parameter information of the intelligent model, where the input parameter information indicates an input parameter of the intelligent model. The first information further includes the model structure information. The first model structure is configured in the model structure information, and the model structure information specifically indicates the input parameter, the output parameter, and the included operations of the first model structure, and the connection relationship between the operations. The second node may determine the first model structure in the intelligent model 1. Optionally, if the intelligent model 1 further includes an operation other than the operation in the first model structure, the first information further includes operation information corresponding to the operation included in the intelligent model 1. In addition, a connection relationship between the operations and a connection relationship between an operation and the first model structure are directly or implicitly indicated. Optionally, if the intelligent model 1 further includes a second model structure, the first information further includes model structure information corresponding to the second model structure. For example, if the second model structure is a model structure that has been configured by the first node for the second node before the first node sends the first information, the first information may indicate identification information of the second model structure by using one piece of model structure information to quote the second model structure, and the model structure information may further indicate information that is about the second model structure and that needs to be updated. The second node may consider that a configuration that is of the second model structure and that is not updated in the model structure information remains unchanged. Alternatively, if the second model structure is a model structure that has not been configured, the model structure information may be specifically for configuring an input parameter, an output parameter, and included operations of the second model structure, and a connection relationship between the operations.

Optionally, the first information may be specifically for reconfiguring the intelligent model. Specifically, the first information is for adding the first model structure in the configured intelligent model.

The intelligent model is configured on the second node before the first node sends the first information to the second node. For example, the intelligent model includes a second model structure. The first node may send the first information to the second node, where the first information indicates to add the first model structure in the intelligent model.

In an example 1, the first information may indicate to add the first model structure after the second model structure in the intelligent model.

For example, an output parameter of the second model structure in the intelligent model 1 configured on the second node is an output parameter k, and the output parameter k is also an output parameter of the intelligent model 1. The first node notifies, by using the first information, the second node to add the first model structure in the intelligent model 1. The first information may be represented as follows:

First information: {

    identification information of the intelligent model: {intelligent model 1},

    model structure information: {

        identification information of the model structure: {first model structure},

        input parameter information of the model structure: {**output parameter k**},

        operation information 1, ...,

        operation information N: {operator information, operation parameter information,

    output parameter information: {output parameter k+q}},

        output parameter information of the model structure: {output parameter k+q}, ...},

        output parameter information of the intelligent model: {output parameter k+q}, ...}

In the example 1, the identification information of the intelligent model in the first information indicates the intelligent model 1 that has been configured for the second node. After receiving the first information, the second node determines, based on the identification information of the intelligent model, that the first information is for reconfiguring the intelligent model 1, determines, based on the identification information of the model structure, that the first node configures the first model structure in the intelligent model 1 by using the first information, and may determine, based on the operation information in the first information, the operation included in the first model structure. The second node may determine, by using input information of a model parameter, that the input parameter of the first model structure is the output parameter k of the second model structure, to determine that the first model structure is connected after the second model structure. In addition, the second node determines, based on that the output parameter information of the intelligent model indicates the output parameter k+q of the first model structure, that the output parameter of the intelligent model 1 is updated to the output parameter k+q of the first model structure. In the first information, only the output parameter of the intelligent model 1 is updated by using the output parameter information of the intelligent model. The second node considers that another configuration that is of the intelligent model 1 and that is not updated in the first information remains unchanged. For example, a configuration of the second model structure in the intelligent model 1 remains unchanged.

In the example 1, the input parameter of the first model structure is configured in the first information as the output parameter k of the second model structure, to implicitly indicate that the first model structure is connected after the second model structure.

Alternatively, the first node updates a model structure of the intelligent model 1 by using the first information. Each model structure included in the intelligent model 1 may be configured by using model structure information in the first information. If one of the model structures is a previously configured model structure (for example, the second model structure), model structure information corresponding to the model structure may include only identification information of the model structure. This indicates that an original configuration of the model structure is retained. For a model structure (for example, the first model structure) that has not been configured before, an input parameter, an operation, and an output parameter of the model structure are configured by using model structure information. The first information may be represented as follows:

First information: {

 intelligent model information: {

  identification information of the intelligent model: {intelligent model 1},

  model structure information 1: {identification information of the model structure:

{second model structure}}

  model structure information 2: {

   identification information of the model structure: {first model structure},

   input parameter information of the model structure: {**output parameter k**},

   operation information 1, ...,

   operation information N: {operator information, operation parameter

information, output parameter information: {output parameter k+q}},

   output parameter information of the model structure: {output parameter

k+q}, ...},

  output parameter information of the intelligent model: {output parameter k+q}, ...}

 ...}

The intelligent model information in the first information includes the identification information of the intelligent model, namely, the intelligent model 1. The second node may determine, based on the identification information of the intelligent model, that the first information is for configuring the intelligent model 1. If the intelligent model 1 is originally configured on the second node, where the original intelligent model 1 includes the second model structure, the second node may determine that the first information is specifically for updating (or referred to as reconfiguring) the intelligent model 1. The first information may indicate the second model structure by using the identification information of the model structure in the model structure information 1. In this case, the second node may determine that the intelligent model 1 still includes the second model structure. The model structure information 1 does not include other configuration information of the second model structure. This indicates that a configuration of the second model structure remains unchanged. For example, an operation included in the second model structure remains unchanged, an input parameter of the intelligent model 1 is still used as the input parameter, and an output parameter is the output parameter k.

The intelligent model information further includes the model structure information 2, and the identification information of the model structure in the model structure information 2 indicates the first model structure. The input parameter information of the model structure indicates that the input parameter of the first model structure is the output parameter k. This indicates that the first model structure is connected after the second model structure. The operation included in the first model structure is further configured by using the operation information in the first information. The intelligent model information further includes the output parameter information of the intelligent model, where the output parameter information indicates the output parameter k+q. This indicates that the output parameter of the intelligent model 1 is updated to the output parameter k+q. After receiving the first information, the second node may determine that the first model structure is added after the original second model structure in the intelligent model 1, and the output parameter k+q of the first model structure is used as the output parameter of the intelligent model 1.

In an example 2, the first information may indicate to add the first model structure before the second model structure in the intelligent model. The first information may be represented as follows:

```
First information: {
   model structure information 1: {
      identification information of the model structure: {first model structure},
      ...,
      operation information 1, ...,
      operation information N: { operator information, operation parameter information,
```

```
            output parameter information: {output parameter k+q} },
            output parameter information of the model structure: {output parameter k+q},
            ...}
        model structure information 2: {
            identification information of the model structure: {second model structure},
            input parameter information of the model structure: {output parameter k
+q}, ...},
            ...}
```

In the example 2, the second node may determine, based on that the identification information of the model structure in the model structure information 1 indicates the first model structure, that the first node configures the first model structure by using the model structure information 1 in the first information, where the output parameter information of the first model structure indicates the output parameter k+q of the first model structure. The first information further includes the model structure information 2, the model structure information 2 includes the output parameter information of the second model structure, and an input parameter of the second model structure is updated to the output parameter k+q by using the input parameter information of the second model structure. In this case, the second node may determine that the first node configures the first model structure by using the first information, and updates the input parameter of the second model structure to the output parameter k+q of the first model structure, to determine that the first node adds the first model structure before the second model structure of the intelligent model. The model structure information 2 may include only information that needs to be updated in the second model structure. In this case, the second node considers that a configuration that is not updated in the model structure information 2 remains unchanged. In addition, the second node considers that a configuration that is of the intelligent model and that is not updated in the first information remains unchanged. For example, an original configuration in which an output parameter of the second model structure is used as an output parameter of the intelligent model is retained.

Optionally, after it is configured by using the first information to add the first model structure in the intelligent model, the first model structure is the 1st model structure of the intelligent model, and input parameter information of the first model structure in the model structure information 1 indicates to use an input parameter of the intelligent model as an input parameter of the first model structure.

For example, before the first node sends the first information, the input parameter of the intelligent model is an input parameter 0. In this example, the input parameter information of the first model structure in the model structure information 1 indicates that the input parameter of the first model structure is the input parameter 0. The second node may determine to use the input parameter of the intelligent model as the input parameter of the first model structure.

In an example 3, the intelligent model further includes a third model structure, and the first information specifically indicates to add the first model structure after the third model structure in the intelligent model and before the second model structure.

For an implementation in which it is configured by using the first information to add the first model structure after the third model structure, refer to the descriptions in the example 1. To be specific, the input parameter information of the first model structure in the first information indicates to use an output parameter of the third model structure as the input parameter of the first model structure. In addition, for an implementation of adding the first model structure before the second model structure, refer to the descriptions in the example 2. To be specific, the first information includes the input parameter information of the second model structure, where the input parameter information indicates to use the output parameter of the first model structure as an input parameter of the second model structure. Therefore, the second node may determine, by using the first information, that the first model structure configured by using the first information is added after the third model structure of the intelligent model and before the second model structure.

Optionally, the first information may indicate a relationship between an input parameter and an output parameter of model structures of the intelligent model by using connection relationship information.

For example, before sending the first information, the first node configures the output parameter of the third model structure as an output parameter p, and the first node may indicate, by using the input parameter information of the first model structure in the model structure information 1, that the input parameter of the first model structure is an input parameter s. The second node determines, by using the connection relationship information in the first information, that the first model structure is added after the third model structure. The connection relationship information may be represented as follows:

Connection relationship information: {input parameter s=output parameter p, ...}

The first node may configure an intelligent model based on another intelligent model. If the intelligent model that includes the first model structure and that is configured by using the first information is the first intelligent model, the first node may configure a second intelligent model for the second node based on the first intelligent model.

For example, after the first node configures, for the second node by using the first information, the first intelligent model including the first model structure, the first node sends seventh information to the second node, where the seventh information is for configuring the second intelligent model, and the second intelligent model includes the first intelligent model and a fourth model structure. For example, the seventh information may include identification information of the first intelligent model to indicate that the second intelligent model includes the first intelligent model, and the seventh information further includes model structure information for configuring the fourth model structure. The second node may determine the fourth model structure in the second intelligent model based on the model structure information. In addition, the seventh information further indicates a connection relationship between the first intelligent model and the fourth model structure, so that the second node can determine the connection relationship between the first intelligent model and the fourth model structure in the second intelligent model. For example, the seventh information may be represented as follows:

```
Seventh information: {
        intelligent model information 1: {
            identification information of the second intelligent model,
            input parameter information of the second intelligent model: {input parameter
            a, ...}
            model structure information: {
              identification information of the fourth model structure,
              input parameter information of the fourth model structure: {input parameter
a},
              operation information a, operation information a+1, ...
              output parameter information of the fourth model structure: {output parameter
              a}, ...}
            intelligent model information 2: {
              identification information of the first intelligent model,
              input parameter information of the first intelligent model: {output parameter
              a}, ...}
            output parameter information of the second intelligent model: {output parameter
            b, ...}, ...}, ...}
```

In this example, the seventh information includes the intelligent model information 1, and the intelligent model information 1 includes the identification information of the second intelligent model, to indicate that the intelligent model information 1 is for configuring the second intelligent model. The intelligent model information 1 further includes the model structure information, and the model structure information is for configuring the fourth model structure in the second intelligent model. For example, the model structure information specifically indicates the identification information and an input parameter (namely, the input parameter a of the second intelligent model) that are of the fourth model structure. Operations included in the fourth model structure are configured by using operation information (including the operation information a and the operation information a+1), and the model structure information further indicates that an output parameter of the fourth model structure is the output parameter a. The intelligent model information 1 further includes the intelligent model information 2, and the intelligent model information 2 indicates, by using the identification information of the first intelligent model, that the second intelligent model further includes the first intelligent model. After receiving the seventh information, the second node may determine, by using the identification information of the first intelligent model, that the second intelligent model includes the first intelligent model. In this case, the first intelligent model is reused in the second intelligent model, and the seventh information does not need to include configuration information of an operation in the first intelligent model. This can reduce signaling overheads, and improve efficiency of configuring the intelligent model. Optionally, the second intelligent model may use an updated first intelligent model. For example, the intelligent model information 2 may include operation information corresponding to an operation that needs to be updated in the first intelligent model, and the operation information may indicate one or more of updated operator information, updated operation parameter information, or updated output parameter information of the corresponding operation. Other information that is of the first intelligent model and that is not updated in the intelligent model information 2 remains unchanged.

The input parameter information of the first intelligent model in the intelligent model information 2 indicates the updated output parameter a of the first intelligent model, to indicate that the first intelligent model is after the fourth model structure in the second intelligent model, and an input parameter of the first intelligent model includes the output parameter of the fourth model structure. In addition, the output parameter information of the second intelligent model in the seventh information indicates that an output parameter of the second intelligent model is the output parameter b of the first intelligent model. In this way, the second node can determine model structures of the second intelligent model based on the seventh information.

It should be noted that, in the foregoing example, the seventh information indicates a connection relationship between model structures by using the parameter information to indicate a relationship between an input parameter and an output parameter. However, this disclosure is not limited thereto. The seventh information may further include connection relationship information, to indicate the connection relationship between the model structures and/or a connection relationship between operations by using the connection relationship information.

There may be further the following optional implementations in which the first node configures the intelligent model by using the configuration information of the intelligent model. It should be understood that the configuration information of the intelligent model may be the configuration information of the intelligent model in the implementation A, or may be the first information in the implementation B.

Optionally, the configuration information of the intelligent model may include first indication information, and the first indication information indicates a purpose of the configuration information of the intelligent model.

For example, if the configuration information of the intelligent model is for initially configuring the model structure of the intelligent model, the first indication information in the configuration information of the intelligent model may indicate that the configuration information of the intelligent model is initial configuration information of the intelligent model. If the configuration information of the intelligent model is for reconfiguring the model structure of the intelligent model, the first indication information in the configuration information of the intelligent model may indicate that the configuration information of the intelligent model is reconfiguration information of the intelligent model. If the configuration information of the intelligent model is for adding, updating, or deleting a model structure and/or an operation in the intelligent model, the first indication information may indicate that the configuration information of the intelligent model is the reconfiguration information of the intelligent model.

After receiving the configuration information of the intelligent model from the first node, the second node may determine the intelligent model. In an implementation, the intelligent model is an intelligent model for inferring target information. In this case, after determining the intelligent model, the second node infers the target information by using the intelligent model. In another implementation, the intelligent model is an intelligent model for model training. In this case, after determining the intelligent model, the second node trains the intelligent model by using training data, to obtain a trained intelligent model that can be for inference.

Optionally, when the intelligent model is for the model training, the configuration information of the intelligent model further indicates whether the parameter value of the model parameter of the first model structure is updatable in the model training.

In an example, the configuration information of the intelligent model may include one piece of second indication information, and the second indication information may indicate that the parameter value of the model parameter of the first model structure is updatable or is not updatable. If the second indication information indicates that the parameter value of the model parameter of the first model structure is updatable, the second node determines, based on the second indication information, that the parameter value of the model parameter of the first model structure can be optimized and updated in the model training. If the second indication information indicates that the parameter value of the model parameter of the first model structure is not updatable, the second node determines that the parameter value of the model parameter of the first model structure cannot be optimized or updated in the model training. In other words, the second node uses the parameter value that is of the model parameter of the first model structure and that is configured by the first node.

In another example, the configuration information of the intelligent model may include one or more pieces of second indication information, and one piece of second indication information may correspond to one operation to indicate that a parameter value of a model parameter of the corresponding operation is or is not updatable in the model training. Alternatively, one piece of second indication information may correspond to one model parameter to indicate whether a parameter value of the corresponding model parameter is or is not updatable in the model training.

After receiving the configuration information of the intelligent model, the second node determines, based on the one or more pieces of second indication information in the configuration information of the intelligent model, a model parameter whose parameter value is updatable and/or a model parameter whose parameter value is not updatable in the first model structure in the model training. During the model training, for an updatable parameter value of a model parameter, if the parameter value of the model parameter needs to be optimized and updated, the second node updates the parameter value of the model parameter; or when the parameter value of the model parameter does not need to be optimized or updated, the second node may not update the parameter value of the model parameter. In other words, for the updatable parameter value of the model parameter, the second node may determine, based on a training result, whether the parameter value of the model parameter needs to be updated, and update the parameter value of the model parameter when the parameter value needs to be updated. For a model parameter whose parameter value is not updatable, during the model training, the second node uses the parameter value configured by the first node, and does not update the parameter value of the model parameter.

Optionally, the first node sends fifth information to the second node, where the fifth information indicates to delete the first model structure in the intelligent model.

For example, the first node configures an intelligent model 1 for the second node, where the intelligent model 1 includes the first model structure. The first node may indicate, by using the fifth information, to delete the first model structure from the intelligent model 1, to obtain an intelligent model 1 from which the first model structure has been deleted. The fifth information includes identification information of the intelligent model 1 to indicate that the fifth information is for reconfiguring the intelligent model 1. The fifth information further includes first indication information indicating that a purpose of the fifth information is deletion, and includes identification information of the first model structure. This indicates that the first node deletes the first model structure in the intelligent model 1 by using the fifth information. The fifth information may be represented as follows:

```
Fifth information: {
    identification information of the intelligent model: {intelligent model 1}
    first indication information: {purpose:
f deletion}, identification information of the
    first model structure, ...}, ...}
```

In this example, the fifth information further includes information indicating a connection relationship that needs to be updated and that is of the intelligent model 1 from which the first model structure is deleted. For a specific manner of indicating the connection relationship, refer to the foregoing descriptions. After receiving the fifth information, the second node determines to delete the first model structure from the intelligent model. In this case, the second node infers target information or performs model training by using the intelligent model that is updated based on the fifth information. This is not limited in this disclosure.

Optionally, the first node sends sixth information to the second node, where the sixth information indicates to delete the first model structure.

For example, the first node configures the first model structure for the second node, and the first node may indicate, by using the sixth information, the second node to delete the first model structure. First indication information in the sixth information indicates that the purpose of the configuration information of the intelligent model is deletion, and includes identification information of the first model structure. This indicates that the first node deletes a configuration of the first model structure by using the sixth information. The sixth information may be represented as follows:

```
Sixth information: {first indication information: {purpose: {deletion}, identification
information of the first model structure, ...}, ...}
```

After receiving the sixth information, the second node deletes related configuration information of the first model structure. For example, the second node stores the configuration information of the first model structure in a storage module. After receiving the sixth information, the second node deletes the configuration information of the first model structure from the storage module. In the foregoing case of the fifth information, the second node does not delete the configuration information of the first model structure, and only updates configuration information of the intelligent model 1.

According to the foregoing solution, the first node configures, for the second node by using the first information, the model structure of the intelligent model including at least one operation that includes the parameter and the operator. This enables the communication nodes to reach a consensus on the model structure through information exchange, makes the intelligent model applicable to communication, and implements communication network intelligence. This disclosure further provides a plurality of configuration manners of configuring, updating, and deleting the model structure, so that the intelligent model can be flexibly configured, managed, and applied in a communication network in a low-overhead configuration manner.

In this disclosure, an involved network element may perform a part or all of steps or operations related to the network element. These steps or operations are merely examples. In this disclosure, other operations or variants of various operations may be further performed. In addition, the steps may be performed in a sequence different from that presented in this disclosure, and not all the operations in this disclosure may be performed.

In various examples of this disclosure, unless otherwise stated or there is a logic conflict, terms and/or descriptions in different examples are consistent and may be mutually referenced, and technical features in different examples may be combined based on an internal logical relationship thereof, to form a new example.

The foregoing describes in detail the method provided in this disclosure. The accompanying drawings below describe a communication apparatus and a communication device provided in this disclosure. To implement the functions in the method provided above in this disclosure, each network element may include a hardware structure and/or a software module, and implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

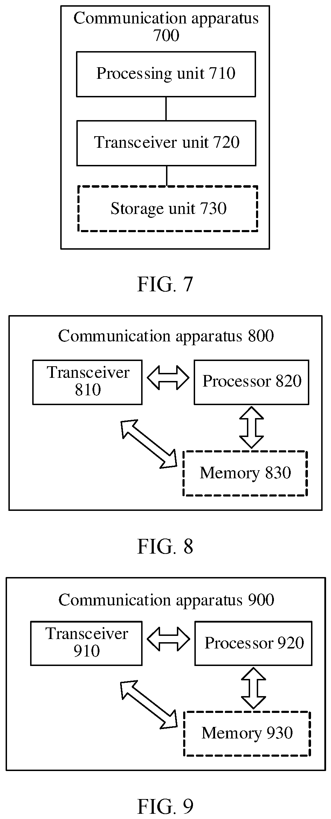

FIG. 7 is a block diagram of a communication apparatus according to this disclosure. As shown in FIG. 7, the communication apparatus 700 may include a transceiver unit 720.

In a possible design, the communication apparatus 700 may correspond to the first node in the foregoing method, a chip configured (or used) in the first node, or another apparatus, module, circuit, unit, or the like that can implement the method performed by the first node.

It should be understood that the communication apparatus 700 may include units configured to perform the method performed by the first node in the method shown in FIG. 4. In addition, the units in the communication apparatus 700 and the foregoing other operations and/or functions are respectively intended to implement corresponding procedures of the method shown in FIG. 4.

Optionally, the communication apparatus 700 may further include a processing unit 710. The processing unit 710 may be configured to process instructions or data, to implement a corresponding operation.

It should be further understood that when the communication apparatus 700 is the chip configured (or used) in the first node, the transceiver unit 720 in the communication apparatus 700 may be an input/output interface or a circuit in the chip, and the processing unit 710 in the communication apparatus 700 may be a processor in the chip.

Optionally, the communication apparatus 700 may further include a storage unit 730. The storage unit 730 may be configured to store instructions or data. The processing unit 710 may execute the instructions or the data stored in the storage unit, to enable the communication apparatus to implement a corresponding operation.

It should be understood that the transceiver unit 720 in the communication apparatus 700 may be implemented by a communication interface (for example, a transceiver, a transceiver circuit, an input/output interface, or a pin), and for example, may correspond to a transceiver 810 in the communication apparatus 800 shown in FIG. 8. The processing unit 710 in the communication apparatus 700 may be implemented by at least one processor, and for example, may correspond to a processor 820 in the communication apparatus 800 shown in FIG. 8. The processing unit 710 in the communication apparatus 700 may alternatively be implemented by at least one logic circuit. The storage unit 730 in the communication apparatus 700 may correspond to a memory 830 in the communication apparatus 800 shown in FIG. 8.

It should be further understood that a specific process in which the units perform the foregoing corresponding steps is described in detail in the foregoing method embodiments. For brevity, details are not described herein again.

In another possible design, the communication apparatus 700 may correspond to the second node in the foregoing method, a chip configured (or used) in the second node, or another apparatus, module, circuit, unit, or the like that can implement the method performed by the second node.

It should be understood that the communication apparatus 700 may include units configured to perform the method performed by the second node in the method shown in FIG. 4. In addition, the units in the communication apparatus 700 and the foregoing other operations and/or functions are respectively intended to implement corresponding procedures of the method shown in FIG. 4.

Optionally, the communication apparatus 700 may further include a processing unit 710. The processing unit 710 may be configured to process instructions or data, to implement a corresponding operation.

It should be further understood that when the communication apparatus 700 is the chip configured (or used) in the second node, the transceiver unit 720 in the communication apparatus 700 may be an input/output interface or a circuit in the chip, and the processing unit 710 in the communication apparatus 700 may be a processor in the chip.

Optionally, the communication apparatus 700 may further include a storage unit 730. The storage unit 730 may be configured to store instructions or data. The processing unit 710 may execute the instructions or the data stored in the storage unit, to enable the communication apparatus to implement a corresponding operation.

It should be understood that when the communication apparatus 700 is the second node, the transceiver unit 720 in the communication apparatus 700 may be implemented by a communication interface (for example, a transceiver, a transceiver circuit, an input/output interface, or a pin), and for example, may correspond to a transceiver 910 in a communication apparatus 900 shown in FIG. 9. The processing unit 710 in the communication apparatus 700 may be implemented by at least one processor, and for example, may correspond to a processor 920 in the communication apparatus 900 shown in FIG. 9. The processing unit 710 in the communication apparatus 700 may be implemented by at least one logic circuit. The storage unit 730 in the communication apparatus 700 may correspond to a memory 930 in the communication apparatus 900 shown in FIG. 9.

It should be further understood that a specific process in which the units perform the foregoing corresponding steps is described in detail in the foregoing method embodiments. For brevity, details are not described herein again.

FIG. 8 is a diagram of a structure of a communication apparatus 800 according to this disclosure. The communication apparatus 800 may be used in the system shown in FIG. 1, to perform a function of the first node in the foregoing method.

As shown in FIG. 8, the communication apparatus 800 includes the processor 820 and the transceiver 810. Optionally, the communication apparatus 800 further includes the memory 830. The processor 820, the transceiver 810, and the memory may communicate with each other through an internal connection path for transmission of a control signal and/or a data signal. The memory is configured to store a computer program. The processor 820 is configured to execute the computer program in the memory, to control the transceiver 810 to receive and send a signal.

The processor 820 may be configured to perform an action that is internally implemented by the first node and that is described in the foregoing method, and the transceiver 810 may be configured to perform a sending or receiving action of the first node described in the foregoing method. For details, refer to the descriptions in the foregoing method. The details are not described herein again.

Optionally, the communication apparatus 800 may further include a power supply, configured to supply power to various components or circuits in the communication apparatus.

FIG. 9 is a diagram of a structure of a communication apparatus 900 according to this disclosure. The communication apparatus 900 may be used in the system shown in FIG. 1, to perform a function of the second node in the foregoing method.

As shown in FIG. 9, the communication apparatus 900 includes the processor 920 and the transceiver 910. Optionally, the communication apparatus 900 further includes the memory. The processor 920, the transceiver 910, and the memory may communicate with each other through an internal connection path for transmission of a control signal and/or a data signal. The memory is configured to store a computer program. The processor 920 is configured to execute the computer program in the memory, to control the transceiver 910 to receive and send a signal.

The processor 920 may be configured to perform an action that is internally implemented by the second node and that is described in the foregoing method, and the transceiver 910 may be configured to perform a sending or receiving action of the second node described in the foregoing method. For details, refer to the descriptions in the foregoing method. The details are not described herein again.

Optionally, the communication apparatus 900 may further include a power supply, configured to supply power to various components or circuits in the communication apparatus.

In an implementation, the communication apparatus 800 may correspond to a network device (for example, an access network device or a core network device, but this application is not limited thereto), and the communication apparatus 900 may correspond to a terminal device.

In another implementation, the communication apparatus 800 and the communication apparatus 900 may correspond to different network devices. For example, the communication apparatus 800 may correspond to a core network device, and the communication apparatus 900 may correspond to an access network device. However, this is not limited in this application.

In the foregoing two implementations, that a communication apparatus corresponds to a communication device (for example, the network device or the terminal device) may be understood as that the communication apparatus is the communication device, is a chip configured (or used) in the communication device, or is another apparatus, module, circuit, unit, or the like configured in the communication device.

In the communication apparatuses shown in FIG. 8 and FIG. 9, the processor and the memory may be combined into one processing apparatus, and the processor is configured to execute program code stored in the memory, to implement the foregoing functions. In a specific implementation, the memory may be integrated into the processor, or independent of the processor. The processor may correspond to the processing unit in FIG. 7. The transceiver may correspond to the transceiver unit in FIG. 7. The transceiver 810 may include a receiver (or referred to as a receiver circuit) and a transmitter (or referred to as a transmitter circuit). The receiver is configured to receive a signal, and the transmitter is configured to transmit a signal.

In this disclosure, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams of this disclosure. The general-purpose processor may be a microprocessor, any conventional processor, or the like. The steps of the methods with reference to this disclosure may be directly implemented by a hardware processor, or may be implemented by a combination of hardware and a software module in the processor.

In this disclosure, the memory may be a non-volatile memory, for example, a hard disk drive (hard disk drive, HDD) or a solid-state drive (solid-state drive, SSD); or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in this disclosure may alternatively be a circuit or any other apparatus that can implement a storage function, and is configured to store program instructions and/or data.

This disclosure further provides a processing apparatus, including a processor and a (communication) interface. The processor is configured to perform the method in any one of the foregoing methods.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

According to the method provided in this disclosure, this disclosure further provides a computer program product. The computer program product includes computer program code. When the computer program code is executed by one or more processors, an apparatus including the processor is enabled to perform the method shown in FIG. 4.

All or some of the technical solutions provided in this disclosure may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on a computer, the procedures or functions according to the present invention are all or partially generated. The computer instructions may be stored in a computer-readable storage medium, or transmitted from a computer-readable storage medium to another computer-readable storage medium. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

According to the method provided in this disclosure, this disclosure further provides a computer-readable storage medium. The computer-readable storage medium stores program code. When the program code is executed by one or more processors, an apparatus including the processor is enabled to perform the method shown in FIG. 4.

According to the method provided in this disclosure, this disclosure further provides a system including one or more first nodes above. The system may further include one or more second nodes above.

In several embodiments provided in this disclosure, it should be understood that the disclosed system, apparatus, and method may be implemented in other manners. For example, the described apparatuses are merely examples. For example, the division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions.

The foregoing descriptions are merely specific implementations of this disclosure, but are not intended to limit the protection scope of this disclosure. Any variation or replacement readily figured out by a person skilled in the art within the technical scope disclosed in this disclosure shall fall within the protection scope of this disclosure. Therefore, the protection scope of this disclosure shall be subject to the protection scope of the claims.

**Claims**

1. A communication method, comprising:

   receiving first information from a first node, wherein the first information is for configuring a first model structure of an intelligent model, the first model structure comprises N operations, N is a positive integer, an operation in the N operations is a calculation for obtaining an output parameter by using an operation parameter and an operator, and the operator is an operation rule or a function; and

   determining the intelligent model based on the first information.

2. The method according to claim 1, wherein for an operation in the N operations, the first information indicates the operator and the operation parameter that are used in the operation.

3. The method according to claim 1 or 2, wherein for an operation in the N operations, the first information further indicates one or more of identification information, dimension information, precision information, or data type information of the output parameter.

4. The method according to any one of claims 1 to 3, wherein the first information indicates an input parameter and/or an output parameter of the first model structure.

5. The method according to any one of claims 1 to 4, wherein the N operations comprise a first operation and a second operation, and the first information indicates that an operation parameter of the first operation comprises an output parameter of the second operation.

6. The method according to any one of claims 1 to 5, wherein the operation parameter comprises a model parameter, and the first information indicates a parameter value of the model parameter, or indicates identification information of the model parameter.

7. The method according to claim 6, wherein the first information indicates whether the parameter value of the model parameter is updatable in model training.

8. The method according to claim 6 or 7, wherein the first information indicates the identification information of the model parameter, and the method further comprises:

receiving second information from the first node, wherein the second information indicates a candidate set of the parameter value of the model parameter; and

determining the parameter value of the model parameter based on the identification information of the model parameter and the candidate set.

9. The method according to any one of claims 1 to 8, wherein the method further comprises:
receiving third information from the first node, wherein the third information is for configuring one or more of a quantization mode, a quantization range, or quantization precision of a parameter of the first model structure.

10. The method according to any one of claims 1 to 9, wherein the method further comprises:
sending fourth information to the first node, wherein the fourth information comprises one or more of the following capability information:

first capability information, indicating a supported integration degree of an operator;
second capability information, indicating a supported operator set; or
third capability information, indicating a supported quantization configuration.

11. The method according to any one of claims 1 to 10, wherein the first information indicates one or more of dimension information, parameter type information, or identification information of the operation parameter.

12. The method according to any one of claims 1 to 11, wherein the first information is for configuring to add or update the first model structure in the intelligent model.

13. The method according to any one of claims 1 to 12, wherein the first information is for configuring to add or update the N operations in the first model structure.

14. The method according to any one of claims 1 to 13, wherein the first model structure further comprises M operations, M is a positive integer, and that the first information is for configuring a first model structure of an intelligent model further comprises:
the first information indicates to delete the M operations from the first model structure.

15. The method according to any one of claims 1 to 14, wherein the method further comprises:
receiving fifth information from the first node, wherein the fifth information indicates to delete the first model structure in the intelligent model.

16. A communication method, comprising:
sending first information to a second node, wherein the first information is for configuring a first model structure of an intelligent model, the first model structure comprises N operations, N is a positive integer, an operation in the N operations is a calculation for obtaining an output parameter by using an operation parameter and an operator, and the operator is an operation rule or a function.

17. The method according to claim 16, wherein for an operation in the N operations, the first information indicates the operator and the operation parameter that are used in the operation.

18. The method according to claim 16 or 17, wherein for an operation in the N operations, the first information further indicates one or more of identification information, dimension information, precision information, or data type information of the output parameter.

19. The method according to any one of claims 16 to 18, wherein the first information indicates an input parameter and/or an output parameter of the first model structure.

20. The method according to any one of claims 16 to 19, wherein the N operations comprise a first operation and a second operation, and the first information indicates that an operation parameter of the first operation comprises an output parameter of the second operation.

21. The method according to any one of claims 16 to 20, wherein the operation parameter comprises a model parameter, and the first information indicates a parameter value of the model parameter, or indicates identification information of the model parameter.

22. The method according to claim 21, wherein the first information indicates whether the parameter value of the model parameter is updatable in model training.

23. The method according to claim 21 or 22, wherein the first information indicates the identification information of the model parameter, and the method further comprises:
sending second information to the second node, wherein the second information indicates a candidate set of the parameter value of the model parameter.

24. The method according to any one of claims 16 to 23, wherein the method further comprises:
sending third information to the second node, wherein the third information is for configuring one or more of a quantization mode, a quantization range, or quantization precision of a parameter of the first model structure.

25. The method according to any one of claims 16 to 24, wherein the method further comprises:

receiving fourth information sent from the second node, wherein the fourth information indicates capability information of the second node; and
determining the first model structure based on the fourth information, wherein
the capability information comprises one or more of the following information:
first capability information, indicating a supported integration degree of an operator;
second capability information, indicating a supported operator set; or
third capability information, indicating a supported quantization configuration.

26. The method according to any one of claims 16 to 25, wherein
the first information indicates one or more of dimension information, parameter type information, or identification information of the operation parameter.

27. The method according to any one of claims 16 to 26, wherein the first information is for configuring to add or update the first model structure in the intelligent model.

28. The method according to any one of claims 16 to 27, wherein the first information is for configuring to add or update the N operations in the first model structure.

29. The method according to any one of claims 16 to 28, wherein the first model structure further comprises M operations, M is a positive integer, and that the first information is for configuring a first model structure of an intelligent model further comprises:
the first information indicates to delete the M operations from the first model structure.

30. The method according to any one of claims 16 to 29, wherein the method further comprises:
sending fifth information to the second node, wherein the fifth information indicates to delete the first model structure in the intelligent model.

31. A communication apparatus, comprising:

a transceiver unit, configured to receive first information from a first node, wherein the first information is for configuring a first model structure of an intelligent model, the first model structure comprises N operations, N is a positive integer, an operation in the N operations is a calculation for obtaining an output parameter by using an operation parameter and an operator, and the operator is an operation rule or a function; and
a processing unit, configured to determine the intelligent model based on the first information.

32. The apparatus according to claim 31, wherein for an operation in the N operations, the first information indicates the operator and the operation parameter that are used in the operation.

33. The apparatus according to claim 31 or 32, wherein for an operation in the N operations, the first information further indicates one or more of identification information, dimension information, precision information, or data type information of the output parameter.

34. The apparatus according to any one of claims 31 to 33, wherein the first information indicates an input parameter and/or an output parameter of the first model structure.

35. The apparatus according to any one of claims 31 to 34, wherein the N operations comprise a first operation and a second operation, and the first information indicates that an operation parameter of the first operation comprises an output parameter of the second operation.

36. The apparatus according to any one of claims 31 to 35, wherein the operation parameter comprises a model parameter, and the first information indicates a parameter value of the model parameter, or indicates identification information of the model parameter.

37. The apparatus according to claim 36, wherein the first information indicates whether the parameter value of the model parameter is updatable in model training.

38. The apparatus according to claim 36 or 37, wherein the first information indicates the identification information of the model parameter;

the transceiver unit is further configured to receive second information from the first node, wherein the second information indicates a candidate set of the parameter value of the model parameter; and
the processing unit is further configured to determine the parameter value of the model parameter based on the identification information of the model parameter and the candidate set.

39. The apparatus according to any one of claims 31 to 38, wherein the transceiver unit is further configured to receive third information from the first node, wherein the third information is for configuring one or more of a quantization mode, a quantization range, or quantization precision of a parameter of the first model structure.

40. The apparatus according to any one of claims 31 to 39, wherein the transceiver unit is further configured to send fourth information to the first node, wherein the fourth information comprises one or more of the following capability information:

first capability information, indicating a supported integration degree of an operator;
second capability information, indicating a supported operator set; or
third capability information, indicating a supported quantization configuration.

41. The apparatus according to any one of claims 31 to 40, wherein the first information indicates one or more of dimension information, parameter type information, or identification information of the operation parameter.

42. The apparatus according to any one of claims 31 to 41, wherein the first information is for configuring to add or update the first model structure in the intelligent model.

43. The apparatus according to any one of claims 31 to 42, wherein the first information is for configuring to add or update the N operations in the first model structure.

44. The apparatus according to any one of claims 31 to 43, wherein the first model structure further comprises M operations, M is a positive integer, and that the first information is for configuring a first model structure of an intelligent model further comprises:
the first information indicates to delete the M operations from the first model structure.

45. The apparatus according to any one of claims 31 to 44, wherein the transceiver unit is further configured to receive fifth information from the first node, wherein the fifth information indicates to delete the first model structure in the intelligent model.

46. A communication apparatus, comprising:

a processing unit, configured to determine first information, wherein the first information is for configuring a first model structure of an intelligent model, the first model structure comprises N operations, N is a positive integer, an operation in the N operations is a calculation for obtaining an output parameter by using an operation parameter and an operator, and the operator is an operation rule or a function; and

a transceiver unit, configured to send the first information to a second node.

47. The apparatus according to claim 46, wherein for an operation in the N operations, the first information indicates the operator and the operation parameter that are used in the operation.

48. The apparatus according to claim 46 or 47, wherein for an operation in the N operations, the first information further indicates one or more of identification information, dimension information, precision information, or data type information of the output parameter.

49. The apparatus according to any one of claims 46 to 48, wherein the first information indicates an input parameter and/or an output parameter of the first model structure.

50. The apparatus according to any one of claims 46 to 49, wherein the N operations comprise a first operation and a second operation, and the first information indicates that an operation parameter of the first operation comprises an output parameter of the second operation.

51. The apparatus according to any one of claims 46 to 50, wherein the operation parameter comprises a model parameter, and the first information indicates a parameter value of the model parameter, or indicates identification information of the model parameter.

52. The apparatus according to claim 51, wherein the first information indicates whether the parameter value of the model parameter is updatable in model training.

53. The apparatus according to claim 51 or 52, wherein the first information indicates the identification information of the model parameter, and the transceiver unit is further configured to send second information to the second node, wherein the second information indicates a candidate set of the parameter value of the model parameter.

54. The apparatus according to any one of claims 46 to 53, wherein the transceiver unit is further configured to send third information to the second node, wherein the third information is for configuring one or more of a quantization mode, a quantization range, or quantization precision of a parameter of the first model structure.

55. The apparatus according to any one of claims 46 to 54, wherein

the transceiver unit is further configured to receive fourth information sent from the second node, wherein the fourth information indicates capability information of the second node; and
the processing unit is further configured to determine the first model structure based on the fourth information, wherein
the capability information comprises one or more of the following information:

first capability information, indicating a supported integration degree of an operator;
second capability information, indicating a supported operator set; or
third capability information, indicating a supported quantization configuration.

56. The apparatus according to any one of claims 46 to 55, wherein
the first information indicates one or more of dimension information, parameter type information, or identification information of the operation parameter.

57. The apparatus according to any one of claims 46 to 56, wherein the first information is for configuring to add or update the first model structure in the intelligent model.

58. The apparatus according to any one of claims 46 to 57, wherein the first information is for configuring to add or update the N operations in the first model structure.

59. The apparatus according to any one of claims 46 to 58, wherein the first model structure further comprises M operations, M is a positive integer, and that the first information is for configuring a first model structure of an intelligent model further comprises:
the first information indicates to delete the M operations from the first model structure.

**60.** The apparatus according to any one of claims 46 to 59, wherein the transceiver unit is further configured to send fifth information to the second node, wherein the fifth information indicates to delete the first model structure in the intelligent model.

**61.** A communication apparatus, comprising a processor and a memory, wherein the memory is coupled to the processor, and the processor is configured to perform the method according to any one of claims 1 to 15 or perform the method according to any one of claims 16 to 30.

**62.** A communication apparatus, comprising a processor and a communication interface, wherein the processor performs the method according to any one of claims 1 to 15 or the method according to any one of claims 16 to 30 using the communication interface.

**63.** A communication system, comprising the communication apparatus according to any one of claims 31 to 45 and the communication apparatus according to any one of claims 46 to 60.

**64.** A computer-readable storage medium, storing instructions, wherein when the instructions are run on a computer, the computer is enabled to perform the method according to any one of claims 1 to 30.

**65.** A computer program product, comprising instructions, wherein when the instructions are run on a computer, the computer is enabled to perform the method according to any one of claims 1 to 30.

FIG. 1

FIG. 2

Access network device

Near-real-time RIC

CU

DU

RU

Terminal device

FIG. 3A

Non-real-time RIC

Access network device

CU

DU

RU

Terminal device

FIG. 3B

Non-real-time RIC

Access
network
device

Near-real-time RIC

CU

DU

RU

Terminal
device

FIG. 3C

Non-real-time RIC

Access
network
device

Near-real-time RIC

CU-CP

CU-UP

DU

RU

Terminal
device

FIG. 3D

FIG. 3E

FIG. 3F

400

```
┌─────────────┐                                    ┌──────────────┐
│ First node  │                                    │ Second node  │
└──────┬──────┘                                    └──────┬───────┘
       │                                                  │
       │  S401: Send first information, where the first   │
       │  information is for configuring a first model    │
       │  structure of an intelligent model, and the      │
       │  first model structure includes N operations     │
       │ ─────────────────────────────────────────────▶  │
       │                                                  │
       │   ┌──────────────────────────────────────────────────┐
       │   │ S402: Determine the intelligent model based on    │
       │   │ the first information                             │
       │   └──────────────────────────────────────────────────┘
       │                                                  │
```

FIG. 4

Input parameter
↓
┌──────────────────┐
│ Two-dimensional  │
│   convolution    │
└──────────────────┘
↓
┌──────────────────┐
│  Residual block  │
└──────────────────┘
↓
┌──────────────────┐
│ Two-dimensional  │
│   convolution    │
└──────────────────┘
↓
Output parameter

FIG. 5

Input parameter
↓
┌────────────────────────────────┐
│ Two-dimensional convolution    │   601
└────────────────────────────────┘
┌ ─ ─ ─ ─ ─ ─ ─ ↓ ─ ─ ─ ─ ─ ─ ─ ┐
│ ┌────────────────────────────────┐ │
│ │ Two-dimensional convolution    │ │
│ └────────────────────────────────┘ │
│             ↓                       │
│ ┌────────────────────────────────┐ │
│ │ Batch regularization function  │ │
│ └────────────────────────────────┘ │
│             ↓                       │
│ ┌────────────────────────────────┐ │
│ │       ReLU function            │ │
│ └────────────────────────────────┘ │
└ ─ ─ ─ ─ ─ ─ ─ ↓ ─ ─ ─ ─ ─ ─ ─ ┘
┌────────────────────────────────┐
│ Two-dimensional convolution    │
└────────────────────────────────┘
↓
Output parameter

FIG. 6

Communication apparatus 700

Processing unit 710

Transceiver unit 720

Storage unit 730

FIG. 7

Communication apparatus 800

Transceiver 810 ⟺ Processor 820

Memory 830

FIG. 8

Communication apparatus 900

Transceiver 910 ⟺ Processor 920

Memory 930

FIG. 9

## INTERNATIONAL SEARCH REPORT

| | International application No. |
|---|---|
| | **PCT/CN2023/082010** |

### A. CLASSIFICATION OF SUBJECT MATTER

H04W 24/02(2009.01)i; H04L 41/0823(2022.01)i

According to International Patent Classification (IPC) or to both national classification and IPC

### B. FIELDS SEARCHED

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT, ENTXTC, DWPI, CNKI, 3GPP: 智能模型, AI模型, ML模型, 人工智能, 机器学习, 配置, 算子, 算符, 运算符号, 函数, 量化, 精度, AI model, ML model, configuration, operator, function, quantiz+, precision

### C. DOCUMENTS CONSIDERED TO BE RELEVANT

| Category* | Citation of document, with indication, where appropriate, of the relevant passages | Relevant to claim No. |
|---|---|---|
| X | CN 114143799 A (HUAWEI TECHNOLOGIES CO., LTD.) 04 March 2022 (2022-03-04) description, paragraphs [0116]-[0375] and [0492]-[0573] | 1-5, 11, 16-20, 26, 31-35, 41, 46-50, 56, 61-65 |
| A | CN 113839797 A (HUAWEI TECHNOLOGIES CO., LTD.) 24 December 2021 (2021-12-24) entire document | 1-65 |
| A | WO 2022042528 A1 (HUAWEI TECHNOLOGIES CO., LTD.) 03 March 2022 (2022-03-03) entire document | 1-65 |
| A | CHINA TELECOM. "Solution to AI based ES in RAN Split Architecture" *3GPP TSG-RAN WG3 #113-e, R3-213956*, 26 August 2021 (2021-08-26), entire document | 1-65 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 May 2023** | **07 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| | | | International application No. |
|---|---|---|---|
| | | | **PCT/CN2023/082010** |

| Patent document cited in search report | | | Publication date (day/month/year) | Patent family member(s) | | | Publication date (day/month/year) |
|---|---|---|---|---|---|---|---|
| CN | 114143799 | A | 04 March 2022 | None | | | |
| CN | 113839797 | A | 24 December 2021 | WO | 2021258986 | A1 | 30 December 2021 |
| WO | 2022042528 | A1 | 03 March 2022 | CN | 114095969 | A | 25 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210283542